# EUROPEAN PATENT SPECIFICATION

(11) **EP 3 578 062 B1**
(45) Date of publication and mention of the grant of the patent: **04.11.2026**
(21) Application number: 18838610.6
(22) Date of filing: 25.07.2018
(51) Int. Cl.: A23L 35/00, A23L 27/60, A23L 23/00

(54) **EMULSIFIED CONDIMENT AND PRODUCTION METHOD THEREOF**
EMULGIERTES WÜRZMITTEL UND DESSEN HERSTELLUNGSVERFAHREN
ASSAISONNEMENT ÉMULSIONNÉ ET SON PROCÉDÉ DE PRODUCTION

(30) Priority: 28.07.2017 JP 2017147168
(43) Date of publication of application: 11.12.2019
(60) Divisional application: 26205007.3
(73) Proprietor: Mizkan Holdings Co., Ltd., Handa-shi, Aichi 475-8585 (JP)
(72) Inventor: SHIBATA, Eri, Handa-shi Aichi 475-8585 (JP)
(74) Representative: Hasegawa, Kan
(86) International application number: PCT/JP2018/027896
(87) International publication number: WO 2019/022137

(56) References cited:
- EP-A1- 3 632 220
- WO-A1-2013/061653
- WO-A1-2014/001031
- WO-A1-2017/080872
- JP-A- 2001 252 042
- JP-A- 2015 123 018
- JP-A- H02 211 844
- JP-A- H11 290 036
- US-B1- 6 635 777
- US-B1- 6 899 913
- US-B2- 8 883 241
- YONG QIWEN ET AL: "Synthesis and surface analysis of self-matt coating based on waterborne polyurethane resin and study on the matt mechanism", POLYMER BULLETIN, SPRINGER, HEIDELBERG, DE, vol. 74, no. 4, 26 July 2016 (2016-07-26), pages 1061 - 1076, XP036179363, ISSN: 0170-0839, [retrieved on 20160726], DOI: 10.1007/S00289-016-1763-7

## Description

### Technical Field

The present invention relates to an emulsified condiment and a method for manufacturing the condiment.

### Background Art

In recent years, foods have become more sophisticated, a visual sense of beauty has been increasingly contrived, and confectionery-like decorations have also been applied to daily meals. With such a trend, the role of condiments in food is changing, and in addition to the original role of providing deliciousness, new roles such as enjoyment, beauty, and attractiveness of appearance, have become more important. At the same time, due to rise in health consciousness, food additives such as synthetic colorants, tend to be avoided, and condiments having natural colors derived from natural products and providing good taste simultaneously as being easy to use and nice in appearance have been demanded. In addition, the appearance of foods is also closely related to the appetite of the eater, and condiments having good compatibility with any food and having chic appearance to enhance the attractiveness of appearance of food to which the condiment is applied and enhancing the appetite have been demanded.

In particular, nowadays, opportunities to photograph foods are increasing with the spread of SNS and so on. However, emulsified condiments have issues that the appearance tends to be monotonous due to the small variation of their raw ingredients, the glossiness due to oil/fat as the raw ingredient is too high, and the matte feeling is insufficient.

In conventional emulsified condiments, a W/O/W type emulsified condiment having a glossy feeling like mayonnaise obtained by adjusting, for example, the contents of egg yolk and egg white has been reported (Patent Literature 1). Regarding emulsified pasta sauce which is put on boiled pasta in a proportion of 50 to 100 g for one serving of the paste at room temperature and is eaten, an emulsified pasta sauce whose specific glossiness is maintained over time after mixed with boiled pasta by adjusting the viscosity and so on has been reported (Patent Literature 2). Also patent document US8883241 B2 discloses an emulsified condiment of glossy appearance.

### Citation List

### Patent Literature

Patent Literature 1: JP-A-2016-86748
Patent Literature 2: JP-A-2016-149995

### Summary of Invention

### Technical Problem

However, the methods described in Patent Literatures 1 and 2 are both methods for manufacturing emulsified condiments having glossy feeling, and emulsified condiments in which the excessive glossy feeling is suppressed and matte feeling is further given have not yet been reported.

Accordingly, it is an object of the present invention to provide an emulsified condiment having suppressed excessive glossy feeling and further provided with matte feeling and having a good shape retention property.

### Solution to Problem

Accordingly, the present inventors have extensively endeavored to obtain an emulsified condiment in which excessive glossy feeling is suppressed and matte feeling is further given and have found that in an emulsified condiment containing specific fine food particles, an oil/fat, an organic acid, water, and salt and having a specific color tone appearance, excessive glossy feeling is suppressed, matte feeling is further given, and the shape retention property is excellent, and accomplished the present invention.

That is, the present invention relates to the following [1] to [11].
[1] An emulsified condiment comprising fine food particles of at least one selected from the group consisting of pulses and nuts/seeds; an oil/fat; an organic acid; water; and salt, wherein
   (1) a content of the fine food particles is 8 mass% or more and 98 mass% or less;
   (2) a total content of the oil/fat is 20 mass% or more;
   (3) a modal diameter is 0.3 µm or more and 100 µm or less;
   (4) a content of water is 20 mass% or more;
   (5) a value in a Munsell color system is 6 or more and 9 or less;
   (6) a chroma in the Munsell color system is 1 or more and 6 or less;
   (7) a hue in the Munsell color system is from 0Y to 10Y or from 0GY to 10GY; and
   (8) a viscosity value measured with a Bostwick viscometer at a measurement temperature of 4°C and a measurement time of 10 seconds is 28.0 cm or less.
[2] The emulsified condiment according to [1], wherein the pulse is soybean and the nut/seed is almond.
[3] The emulsified condiment according to [1] or [2], further comprising a vegetable.
[4] The emulsified condiment according to [3], wherein the vegetable is a cruciferous plant.
[5] The emulsified condiment according to [3] or [4], wherein the vegetable is at least one selected from the group consisting of cabbage, broccoli, cauliflower, and mustard.
[6] The emulsified condiment according to any of [1] to [5], further comprising at least one food selected from cereals.
[7] The emulsified condiment according to any of [1] to [6], wherein the organic acid includes acetic acid.
[8] The emulsified condiment according to any of [1] to [7], wherein the hue is from 5Y to 10Y or from 0GY to 5GY.
[9] A method for manufacturing the emulsified condiment according to any of [1] to [8], comprising the following steps (a) and (b):
   (a) a step of mixing raw ingredients including at least one selected from the group consisting of pulses and nuts/seeds, an oil/fat, an organic acid, and water to manufacture a mixture solution adjusted to have a solid content of 8 mass% or more and 98 mass% or less, a total content of the oil/fat of 20 mass% or more, and a water content of 20 mass% or more; and
   (b) a step of performing pulverization processing of the mixture solution with at least one selected from the group consisting of a medium stirring mill, a high-pressure homogenizer, and a colloid mill until the mixture solution has appearance in which a value is 6 or more and 9 or less, a chroma is 1 or more and 6 or less, and a hue is from 0Y to 10Y or from 0GY to 10GY in a Munsell color system and has a modal diameter of 0.3 µm or more and 100 µm or less and a viscosity value of 28.0 cm or less measured with a Bostwick viscometer at a measurement temperature of 4°C and a measurement time of 10 seconds.
[10] The method for manufacturing according to [9], wherein the pulverization processing in the step (b) is performed under a pressurized condition of 0.01 MPa or more.
[11] The method for manufacturing according to [9], wherein the pulverization processing in the step (b) is performed with a high-pressure homogenizer under a pressurized condition of 50 MPa or more.

### Advantageous Effects of Invention

The present invention provides an emulsified condiment with suppressed excessive glossy feeling, enhanced matte feeling, and excellent shape retention property.

### Brief Description of Drawing

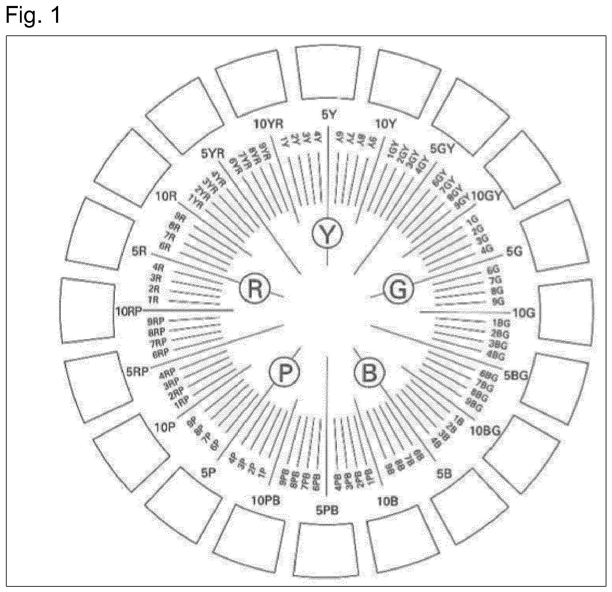

Figure 1 is a diagram showing the hue.

### Description of Embodiments

Although examples of the embodiments of the present invention will now be described, the present invention is not limited to these embodiments and any modification can be made without departing from the scope of the present invention.

The present invention provides an emulsified condiment with suppressed excessive glossy feeling and enhanced matte feeling. The term "glossy feeling" in the present invention represents shiny appearance, and the term "matte feeling" represents cloudy appearance with low luster. These terms mean distinctive characteristics that are used entirely independent from the concept of colors, such as "green with glossy feeling" and "green with matte feeling".

The pulses as the raw ingredient of the fine food particles used in the present invention may be any pulses or any processed product thereof (including that subjected to pretreatment such as cooking, removal of harshness, peeling, ripening, salting, or peel processing) that is used for eating and drinking, and particular examples thereof include common beans, kidney beans, red beans, white beans, black beans, pinto beans, tiger beans, lima beans, safflower beans, peas, pigeon peas, green beans, cowpeas, azuki beans, fava beans, soybeans (including "green soybeans" that are harvested in an immature stage together with sheaths and have green appearance (e.g., a hue of from 0GY (10Y) to 10BG, a value of 5 or more, and a chroma of 3 or more in the Munsell color system)), chickpeas, lentils (Lens culinaris or lentil peas), peanuts, lupine beans, grass peas, locust beans (carob), Parkia speciose, Parkia biglobosa, coffee beans, cacao beans, and Mexican jumping beans. In particular, soybeans (especially green soybeans) can be easily adjusted in color tone and are therefore preferred. Regarding processed products thereof, since the effects of the present invention cannot be sufficiently exhibited by those not containing dietary fibers derived from pulses, the processed products preferably contain dietary fibers (the total amount of dietary fibers is preferably 1% or more, more preferably 2% or more). Incidentally, each of the above-mentioned foodstuffs can be used regardless of whether it is the edible part or the non-edible part thereof.

The nuts/seeds as the raw ingredient of the fine food particles used in the present invention may be any nuts/seeds or any processed product thereof (including that subjected to pretreatment such as cooking, removal of harshness, peeling, ripening, salting, peel processing, or juice extraction) that is used for eating and drinking, and particular examples thereof include almond, cashew nut, pecan, macadamia nut, pistachio, hazelnut, coconut, pine nut, sunflower seed, pumpkin seed, watermelon seed, sweet acorn, walnut, chestnut, ginkgo nut, sesame, and brazil nut. In particular, almond, cashew nut, macadamia nut, pistachio, hazelnut, and coconut can be exemplified. In particular, almond is preferred, and pasted almond (e.g., almond milk) has an excellent effect in color tone adjustment and is therefore preferred. Incidentally, each of the above-mentioned foodstuffs can be used regardless of whether it is the edible part or the non-edible part thereof.

In particular, as the raw ingredient of the fine food particles used in the present invention, pulses, which are the easiest to control the color tone and have excellent effects, are especially preferred. That is, the present invention includes the following [12] and [13].
[12] An emulsified condiment comprising fine food particles of pulses, an oil/fat, an organic acid, water, and salt, wherein
   (1) the content of the fine food particles is 8 mass% or more and 98 mass% or less;
   (2) the total content of the oil/fat is 20 mass% or more;
   (3) the modal diameter is 0.3 µm or more and 100 µm or less;
   (4) the content of water is 20 mass% or more;
   (5) the value in the Munsell color system is 6 or more and 9 or less;
   (6) the chroma in the Munsell color system is 1 or more and 6 or less;
   (7) the hue in the Munsell color system is from 0Y to 10Y or from 0GY to 10GY; and
   (8) the viscosity value measured with a Bostwick viscometer at a measurement temperature of 4°C and a measurement time of 10 seconds is 28.0 cm or less.
[13] A method for manufacturing the emulsified condiment, comprising the following steps (a) and (b):
   (a) a step of mixing raw ingredients including pulses, an oil/fat, an organic acid, and water to manufacture a mixture solution adjusted to have a solid content of 8 mass% or more and 98 mass% or less, a total content of the oil/fat of **20** mass% or more, and a water content of 20 mass% or more; and
   (b) a step of performing pulverization processing of the mixture solution with at least one selected from the group consisting of a medium stirring mill, a high-pressure homogenizer, and a colloid mill until the mixture solution has appearance in which the value is 6 or more and 9 or less, the chroma is 1 or more and 6 or less, and the hue is from 0Y to 10Y or from 0GY to 10GY in the Munsell color system and has a modal diameter of 0.3 µm or more and 100 µm or less and a viscosity valuer of 28.0 cm or less measured with a Bostwick viscometer at a measurement temperature of 4°C and a measurement time of 10 seconds.

In the present invention, it is more preferable to use fine food particles of at least one selected from the group consisting of pulses and nuts/seeds from the viewpoint of emulsion stability, and it is most preferable to use all fine food particles of pulses and nuts/seeds.

The emulsified condiment of the present invention preferably contains vegetables, in addition to fine particles of at least one selected from the group consisting of pulses and nuts/seeds, in the view of easily controlling the hue in the Munsell color system. The vegetables are preferably contained in a form of fine particles or an extract such that the modal diameter of the emulsified condiment is 0.3 µm or more and 100 µm or less.

The vegetable may be any vegetable or any processed product thereof (including that subjected to pretreatment such as cooking, removal of harshness, peeling, ripening, salting, or peel processing) that is used for eating and drinking, and particular examples thereof include Japanese radish, carrot, burdock, rutabaga, beet, beetroot, parsnip, turnip, black salsify, lotus root, arrowhead, shallot, garlic, Chinese onion, lily bulb, fawn lily, kale, onion, asparagus, udo, cabbage, lettuce, spinach, Chinese cabbage, rapeseed, mustard spinach, Chinese mustard cabbage, garlic chive, Japanese bunching onion, nozawana, Japanese butterbur, spinach beet (Swiss chard), potherb mustard, tomato, eggplant, pumpkin, bell pepper, cucumber, mioga ginger, cauliflower, broccoli, edible chrysanthemum, bitter gourd, okra, artichoke, zucchini, sugar beet, ginger, perilla, wasabi, paprika, herbs (watercress, coriander, Chinese water spinach, celery, tarragon, chives, chervil, sage, thyme, laurel, parsley, mustard green, mustard (oriental mustard, white mustard), mioga ginger, mugwort, bazil, oregano, rosemary, peppermint, savory, lemongrass, dill, wasabi leaf, Japanese pepper leaf, and stevia), eastern bracken, osmund, kudzu, tea tree (tea), bamboo shoot, and kale. Although these foodstuffs may be used alone or in combination of two or more thereof, cruciferous plants have an effort of enhancing the delicious and hot taste of a liquid condiment and are desirable. It is more preferably to use at least one selected from the group consisting of cabbage, broccoli, cauliflower, kale, and mustard (oriental mustard, white mustard), and it is particularly desirable to use two or more selected from the group consisting of cabbage, broccoli, cauliflower, kale, and mustard (oriental mustard, white mustard). In addition, the delicious and hot taste of a liquid condiment is further enhanced by further using onion, which is most desirable. Incidentally, each of the above-mentioned foodstuffs can be used whether it is the edible part or the non-edible part thereof.

In addition, the emulsified condiment of the present invention including potatoes, one type of vegetables, (such as sweet potato, cassava, yacon, taro, Japanese taro, konjac, tacca (Polynesian arrowroot), potato, purple potato, Canada potato, yam, Japanese yam, and Chinese yam) can enhance the shape retention property and is preferable. The potatoes are preferably contained in a form of fine particles or an extract such that the modal diameter of the emulsified condiment is 0.3 µm or more and 100 µm or less. Incidentally, each of the above-mentioned foodstuffs can be used whether it is the edible part or the non-edible part thereof.

In addition, the emulsified condiment of the present invention including mushrooms, one type of vegetables, (such as shiitake mushroom, matsutake mushroom, chrysanthemum mushroom, maitake mushroom, Polyporaceae, hiratake mushroom, eryngii, enokitake mushroom, shimeji mushroom, naratake mushroom, mushroom, nameko mushroom, Suillus bovinus, hatsudake mushroom, and chichitake mushroom), can further enhance the delicious and hot taste and is more preferable. The mushrooms are preferably contained in a form of fine particles or an extract such that the modal diameter of the emulsified condiment is 0.3 µm or more and 100 µm or less. Incidentally, each of the above-mentioned foodstuffs can be used whether it is the edible part or the non-edible part thereof.

In addition, the emulsified condiment of the present invention including algae, one type of vegetables, can prevent the fine food particles in the condiment from precipitating and can enhance the stability and is preferable. The algae may be any algae to be used for eating and drinking, for example, macroalgae such as kelps, wakame seaweeds, seaweeds, aonori seaweeds, and tengusa seaweed; and microalgae, such as green algae, red algae, blue-green algae, dinoflagellate, and euglena, and especially, examples thereof include aosa seaweed, green laver, Ulva pertusa, sea grapes (Caulerpa lentillifera), Lychaete ohkuboana, Codium subtubulosum, Cordium minus, Acanthopeltis japonica, Monostroma nitidum, Enteromorpha compressa, Caulerpa okamurae, Ulva intestinalis, Sargassum horneri, Dictyota dichotoma, Eisenia bicyclis, Ecklonia radicosa, Ishige oakmurae, Carpomitra costata, Ishige foliacea, Cassiope lycopodioides, Sargassum thunbergii, Padina arborescens, Sargassum ringgoldianum, Cladosiphon okamuranus, Pyropia tenuipedalis, Hydroclathrus clathratus, Ecklonia cava, Eisenia bicyclis, Scytosiphon lomentaria, Sargassum hormeri, Dictyota coriacea, Petrospongium rugosum, Dictyopteris undulata, Petalonia fascia, Ecklonia stolonifera, Scytosiphon lomentaria, Leathesia disfformis, Sargassum macrocarpum, Petalonia binghamiae, Sargassum fusiforme, Undaria undarioides, Colpomenia sinuosa, Tinocladia crassa, Sargassum fulvellum, Saccharina japonica, Ceratophyllum demersum, Scytosiphon lomentaria, Mutimo cylindricus, Nemacystis decipiens, Chondria crassicaulis, Undaria pinnatifida, Pyropia tenera, Chondrus verrucosus, Bangia fuscopurpurea, Amphiroa zonata, Chondrus yendoi, Gelidium pacficum, Gracilaria vermiculophylla, Gymnogongrus flabelliformis, Pterocladiella tenuis, Grateloupia divaricata, Gracilaria textorii, Dermonema pulvinatum, Phacelocarpus japonicus, Chondrus yendoi, Grateloupia imbricata, Gracilaria parvispora, Pachymeniopsis elliptica, Chondrus giganteus, Gracilariopsis chorda, Grateloupia turuturu, Meristotheca papulosa, Grateloupia crispata, Gloiopeltis furcata, seaweed (Pyropia yezoensis), Gloiopeltis complanata, Besa paradoxa, Dichotomaria falcata, Ptilophora subcostata, Grateloupia livida, Corallina pilulifera, Gloiopeltis furcata, Fushitsunagia catenata, Gelidium elegans, Pyropia suborbiculata, Laurencia okamurae, Euglena, chlorella, Solieria robusta, Grateloupia filicina, Acanthopeltis japonica, Plocamium telfairiae, and Gelidium amansii. Incidentally, each of the above-mentioned foodstuffs can be used, whether it is edible part or non-edible part.

Many algae are rich in polysaccharides, and to refine them is difficult. Accordingly, algae are more preferably used in a form of an extract, such as soup stock.

In addition, since the viscosity value (measurement temperature: 4°C) measured with a Bostwick viscometer at a chilled state of 0°C to 4°C can be easily controlled by containing cereals, it is preferable to contain cereals. The cereals are preferably contained in a form of fine particles or an extract such that the modal diameter of the emulsified condiment is 0.3 µm or more and 100 µm or less.

The cereals may be any cereals or any processed product thereof (including that subjected to pretreatment such as cooking, removal of harshness, peeling, ripening, salting, peel processing, or fermentation) that is used for eating and drinking, and particular examples thereof include corn, rice, wheat, barley, sorghum, oat, triticale, rye, buckwheat, fonio, quinoa, bark, Japanese millet, millet, foxtail millet, giant corn, sugar cane, and amaranth. In particular, rice (especially brown rice) is preferred. When rice is treated by an enzyme, such as koji mold, for liquefaction, such a liquefied product (e.g., amazake) particularly has an excellent effect of color tone adjustment and is thus preferred. In addition, when rice (especially brown rice, further enzyme-treated liquefied rice) is used as the cereals, the emulsion stability is further enhanced by simultaneously using pulses (especially soybean) or nuts/seeds (especially almond, further almond milk). Therefore, such a combination is more preferred. Incidentally, each of the above-mentioned foodstuffs can be used whether it is the edible part or the non-edible part thereof.

The above-mentioned "non-edible part" of a foodstuff refers to a part of the foodstuff that is usually not suitable for eating and drinking and a part that is discarded under general eating habits, and the "edible part" refers to a part excluding the disposal site (non-edible part) from the whole foodstuff (more specifically, the state at the time of purchase). The site and rate of the non-edible part in a foodstuff can be naturally understood by those skilled in the art who handle the food and processed products thereof. For example, the "disposal site" and "disposal rate" described in Standard Tables of Food Composition in Japan, 2015 (Seventh Revised Edition) can be used as the site and rate, respectively, of a non-edible part.

The foodstuffs of the above-mentioned pulses, nuts/seeds, vegetables (including potatoes, algae, and mushrooms), and cereals are preferably dried foods. The quality of the dried foods is preferably such that the water activity of the food (foodstuff) is 0.95 or less from the viewpoint of easily developing viscosity when water is added and broadening the application range and is more preferably 0.9 or less, more preferably 0.8 or less, and further preferably 0.65 or less.

When a dried food is used as a foodstuff, the foodstuff is preferably dried in advance. The foodstuff may be dried by any method that is usually used for drying foods, such as a method by sun drying, shade drying, freeze drying, air drying (e.g., hot air drying, fluid bed drying, spray drying, drum drying, or low-temperature drying), pressure drying, reduced-pressure drying, microwave drying, or oil heat drying, and air drying (especially hot air drying) and freeze drying easily adjust the water content regardless of the material and are convenient for industrial mass processing, and are further preferable.

It is further preferable to pulverize foodstuffs dried in advance in the presence of an oil/fat.

The content of the fine food particles in the emulsified condiment of the present invention is that of fine food particles in the composition excluding foods and other ingredients having larger particle diameters than 2000 µm (2 mm), which are not objects for laser diffraction particle size distribution measurement in the present invention. When the composition contains foods and other ingredients larger than 2 mm, for example, the content refers to the weight of a precipitate fraction obtained by sufficiently removing the supernatant separated by centrifugation of the fraction of the composition passed through a 9 mesh sieve (aperture: 2 mm) (for a solid oil/fat, the solid is dissolved by heating, and foods and other ingredients larger than 2 mm are removed as necessary, and centrifugation is then performed to remove the supernatant). Since a part of oil/fat and water are taken into the precipitate fraction, the total amount of fine food particles refers to the total weight of these ingredients taken into the precipitate fraction and the foods. The content of fine food particles in the emulsified condiment **is 8** mass% or more and 98 mass% or less. If the content is less than 2 mass%, the condiment has oily taste, which is not preferable. In contrast, if the content of fine food particles is higher than 98 mass%, the condiment has "crumbly" quality and is undesirably hard to eat. In order to provide the quality of the emulsified condiment of the present invention such that a large amount of fine food particles can be easily eaten without giving "crumbly" texture in the mouth and without causing oily taste, the content of fine food particles is preferably 15 mass% or more, and most preferably 30 mass% or more. In addition, the content of fine food particles is preferably 98 mass% or less, further preferably 95 mass% or less, further preferably 85 mass% or less, and most preferably 80 mass% or less, in particular, from the viewpoint of "crumbly" texture. The term "crumbly" texture refers to a texture that is difficult to swallow when swallowing a dry and husky powdery food.

Specifically, the content of fine food particles in a composition of the present invention can be measured by, for example, passing an arbitrary amount of the composition through a 9 mesh sieve (tyler mesh), centrifuging the passed fraction at 15000 rpm for 1 minute, sufficiently removing the supernatant, and measuring the weight of the precipitate fraction as the content of the fine food particles in the composition. The residue on the mesh when sieved through 9 mesh is sufficiently left to stand and is then subjected to sieving in such a manner that fine food particles smaller than the aperture of 9 mesh sufficiently pass through the 9 mesh sieve by using a spatula or the like in order not to change the particle size of the composition, and the passed fraction is collected.

The emulsified condiment of the present invention contains an oil/fat, an organic acid, water, and salt, in addition to the fine food particles.

Examples of the oil/fat include an edible oil/fat, various fatty acids, and foods made therefrom, and preferred is an edible oil/fat.

Examples of the edible oil/fat include sesame oil, rapeseed oil, soybean oil, palm oil, palm kernel oil, palm mid-fraction (PMF), cottonseed oil, corn oil, sunflower oil, safflower oil, olive oil, linseed oil, rice oil, camellia oil, perilla oil, flavored oil, coconut oil, grape seed oil, peanut oil, almond oil, avocado oil, salad oil, canola oil, fish oil, beef tallow, lard, chicken fat, MCT (medium-chain triglyceride), diglyceride, hydrogenated oil, transesterified oil, milk fat, and ghee. Among them, a liquid edible oil/fat, such as sesame oil, olive oil, rapeseed oil, soybean oil, corn oil, palm oil, and sunflower oil, has an effect of enhancing the smoothness of the emulsified condiment and is more preferred for more effectively using the present invention. In addition, although the edible oil/fat may be the oil/fat contained in the foodstuffs of the emulsified condiment, an extracted and purified oil/fat shows higher affinity with foodstuffs when added in addition to the foodstuffs and is preferred. The amount of the extracted and purified oil/fat is preferably 10 mass% or more based on the total amount of oil/fat, more preferably 30 mass% or more.

In addition, when the edible oil/fat in the composition has an unsaturated fatty acid proportion (total proportion of monovalent unsaturated fatty acid and multivalent unsaturated fatty acid) higher than the saturated fatty acid proportion, pulverization processing can be efficiently performed, and such a proportion is therefore preferred. It is more preferable that the unsaturated fatty acid proportion be higher than twice the saturated fatty acid proportion.

Examples of the food whose raw ingredient is an edible oil/fat include butter, margarine, shortening, fresh cream, and soymilk cream (e.g., "Ko-Cream" (registered trademark) available from Fuji Oil Co., Ltd.). In particular, foods having physical properties as a liquid can be conveniently used. Two or more of these edible fats/oils and foods made therefrom may be used in any rate.

When the weight proportion of the total content of the oil/fat in the emulsified condiment (i.e., the total content of the oil/fat including not only the oil/fat mixed at the time of preparing the composition but also the oil/fat contained in the fine food particles and other optional ingredients) to the total amount of the condiment in the present invention is less than 10 mass%, the quality in which the matte feeling is suppressed can be easily obtained even if the present invention is not used. Accordingly, the present invention is useful for condiments whose total content of the oil/fat is 20 mass% or more. The proportion of the total oil/fat content in a composition can be measured by analyzing the composition by, for example, a method for measuring "lipid" defined by Japanese Agricultural Standard Law (JAS Law). Although an appropriate measuring method can be used depending on the characteristics of the composition, for example, a method for measuring "oil/fat content" defined in the "Japanese Agricultural Standard for Dressing" can be used for the emulsified condiment of the present invention.

The total content of the oil/fat in the emulsified condiment is 20 mass% or more, preferably 30 mass% or more, and further preferably 40 mass% or more and preferably 70 mass% or less and further preferably 60 mass% or less.

The content of the organic acid in the emulsified condiment of the present invention is preferably 0.1 mass% or more, more preferably 0.2 mass% or more, and further preferably 0.3 mass% or more from the viewpoint of enriching the flavor of the condiment. In addition, from the viewpoint that too large amount of organic acid worsens the balance of condiment taste, the content is preferably 2.0 mass% or less, more preferably 1.0 mass% or less, and further preferably 0.6 mass% or less. The organic acid may be added in a form of an organic acid or may be added in a form of a food containing the organic acid, as long as a certain amount of organic acid is finally contained in the condiment. In addition, the organic acid may be the organic acid itself or an organic acid salt. Specific examples of the organic acid include citric acid, acetic acid, tartaric acid, malic acid, gluconic acid, lactic acid, fumaric acid, and succinic acid. Among these organic acids, from the viewpoint of the flavor, acetic acid and citric acid are preferred, and acetic acid is especially preferred. In addition, combination use of acetic acid and citric acid soothes the acid taste in the organic acids, which is therefore preferred. Examples of the addition include a method by addition of acetic acid or citric acid itself; a method by addition of acetic acid-containing food and drink, such as rice vinegar, grain vinegar, alcohol vinegar, apple vinegar, wine vinegar (grape vinegar), synthetic vinegar, black vinegar, Chinese vinegar, and balsamic vinegar, or citric acid-containing food and drink, such as lemon juice; and a method by combining these methods. Among these methods, when acetic acid is used, from the viewpoint of the balance of acid taste of the condiment, part or the whole of the acetic acid is preferably derived from fruit vinegar. The fruit vinegar is more preferably apple vinegar, balsamic vinegar, or wine vinegar (grape vinegar), and the majority of the acetic acid derived therefrom is preferably derived from these acetic acid-containing foods and drinks. Alternatively, when citric acid is used, part or the whole of the citric acid is more preferably derived from fruit juice or fruit or a processed product thereof, and the majority of the citric acid derived therefrom is preferably derived from these citric acid-containing foods and drinks.

That is, the present invention includes the following [14] to [17].
[14] An emulsified condiment comprising fine food particles of at least one selected from the group consisting of pulses and nuts/seeds; an oil/fat; acetic acid; water; and salt, wherein
   (1) a content of the fine food particles is 8 mass% or more and 98 mass% or less;
   (2) a total content of the oil/fat is 20 mass% or more;
   (3) a modal diameter is 0.3 µm or more and 100 µm or less;
   (4) a content of water is 20 mass% or more;
   (5) a value in a Munsell color system is 6 or more and 9 or less;
   (6) a chroma in the Munsell color system is 1 or more and 6 or less;
   (7) a hue in the Munsell color system is from 0Y to 10Y or from 0GY to 10GY; and
   (8) a viscosity value measured with a Bostwick viscometer at a measurement temperature of 4°C and a measurement time of 10 seconds is 28.0 cm or less.
[15] An emulsified condiment comprising fine food particles of pulses, an oil/fat, acetic acid, water, and salt, wherein
   (1) the content of the fine food particles is 8 mass% or more and 98 mass% or less;
   (2) the total content of the oil/fat is 20 mass% or more;
   (3) the modal diameter is 0.3 µm or more and 100 µm or less;
   (4) the content of water is 20 mass% or more;
   (5) the value in the Munsell color system is 6 or more and 9 or less;
   (6) the chroma in the Munsell color system is 1 or more and 6 or less;
   (7) the hue in the Munsell color system is from 0Y to 10Y or from 0GY to 10GY; and
   (8) the viscosity value measured with a Bostwick viscometer at a measurement temperature of 4°C and a measurement time of 10 seconds is 28.0 cm or less.
[16] A method for manufacturing the emulsified condiment, comprising the following steps (a) and (b):
   (a) a step of mixing raw ingredients including at least one selected from the group consisting of pulses and nuts/seeds, an oil/fat, acetic acid, and water to manufacture a mixture solution adjusted to have a solid content of 8 mass% or more and 98 mass% or less, a total content of the oil/fat of 20 mass% or more, and a water content of 20 mass% or more; and
   (b) a step of performing pulverization processing of the mixture solution with at least one selected from the group consisting of a medium stirring mill, a high-pressure homogenizer, and a colloid mill until the mixture solution has appearance in which the value is 6 or more and 9 or less, the chroma is 1 or more and 6 or less, and the hue is from 0Y to 10Y or from 0GY to 10GY in the Munsell color system and has a modal diameter of 0.3 µm or more and 100 µm or less and a viscosity valuer of 28.0 cm or less measured with a Bostwick viscometer at a measurement temperature of 4°C and a measurement time of 10 seconds.
[17] A method for manufacturing the emulsified condiment, comprising the following steps (a) and (b):
   (a) a step of mixing raw ingredients including pulses, an oil/fat, acetic acid, and water to manufacture a mixture solution adjusted to have a solid content of 8 mass% or more and 98 mass% or less, a total content of the oil/fat of 20 mass% or more, and a water content of 20 mass% or more; and
   (b) a step of performing pulverization processing of the mixture solution with at least one selected from the group consisting of a medium stirring mill, a high-pressure homogenizer, and a colloid mill until the mixture solution has appearance in which the value is 6 or more and 9 or less, the chroma is 1 or more and 6 or less, and the hue is from 0Y to 10Y or from 0GY to 10GY in the Munsell color system and has a modal diameter of 0.3 µm or more and 100 µm or less and a viscosity valuer of 28.0 cm or less measured with a Bostwick viscometer at a measurement temperature of 4°C and a measurement time of 10 seconds.

The emulsified condiment of the present invention contains 20 mass% or more of water. The content of water in the emulsified condiment is preferably 25 mass% or more and further preferably 30 mass% or more. In addition, the content of water in the emulsified condiment is preferably 80 mass% or less and more preferably 70 mass% or less. The content of water in the emulsified condiment of the present invention refers to the weight rate of the total content of water in the composition (i.e., total water content including not only the water mixed at the time of preparing the condiment but also the water contained in the food and other optional ingredients) to the total amount of the composition. The content of water in the whole composition can be measured by analyzing the composition by, for example, a method for measuring "water" defined by Japanese Agricultural Standard Law (JAS Law). Although an appropriate measuring method can be used depending on the characteristics of the composition, for example, a method for measuring "water" in "semi-solid dressing and emulsified liquid dressing" defined in the "Japanese Agricultural Standard for Dressing" can be used for the emulsified condiment of the present invention.

In manufacturing the composition of the present invention, the food is preferably pulverized in a crushing solvent. Specifically, a dried food is preferably subjected to medium stirring milling, especially wet bead milling, using an oily solvent and/or an aqueous solvent as the crushing solvent. Examples of the oily solvent include various edible oils/fats described below. Examples of the aqueous solvent include water and various vinegars and alcohols. These oily solvents and/or aqueous solvents may be used as a mixture of two or more thereof. In particular, for a crushing solvent containing water, the value and the chroma tend to be increased by performing medium stirring milling, especially, wet bead milling, in a state where the water content of the food is lower than the water content of the crushing solvent, which is useful because the value and the chroma can be easily adjusted within a range of the present invention. Specifically, a dried food is preferably subjected to medium stirring milling, especially wet bead milling, using an oil/fat or water as the crushing solvent. In particular, if a food with a hot taste (such as mustard) is subjected to medium stirring milling in a crushing solvent, since the hot taste is excessively exerted, such a food is preferably separately pulverized and is added after medium stirring milling. The food-containing solvent in which a food is contained in an oil/fat or water before pulverization processing preferably has a viscosity of 20 Pa·s or less. When the viscosity is 8 Pa·s or less, the pulverization processing efficiency is further increased, and such a viscosity is useful. In addition, the viscosity (20°C) of the fine food particle-containing composition is preferably 100 mPa·s or more and more preferably 500 mPa·s or more.

In the present invention, the value simply mentioned as "viscosity (20°C)" represents a value measured with a rotational viscometer and can be measured in accordance with an ordinary method with a B-type viscometer. In the measurement, with paying attention to the upper limit of measurement, a measurement value of a sample adjusted to 20°C is obtained using a rotor (No. 1 to No. 4) at an appropriate rotational speed (6 rpm to 60 rpm), and the measurement value is multiplied by a conversion multiplier according to the used rotor and rotational speed to obtain a "viscosity (20°C)" value.

In the measurement, a combination of the rotor and the rotational speed is selected such that the estimated viscosity of a measurement sample is close to a full scale of the upper limit of the measurement conducted from the rotor and the rotational speed. When the viscosity is completely unclear, the viscosity can be measured by sequentially changing the setting of the viscosity range from the maximum viscosity range (rotor: No. 4, rotational speed: 6 rpm) to a lower viscosity range. For example, with a rotor of No. 3 at a rotational speed of 60 rpm, a viscosity can be measured up to 2000 mPa·s, and the measurement value is multiplied by a conversion multiplier 20 to obtain the "viscosity (20°C)" value.

The emulsified condiment of the present invention contains salt. Although the salt may be a salt contained in the foodstuffs of the emulsified condiment, adding purified salt is preferred because it shows higher affinity with foodstuffs when added to the foodstuffs. In the present invention, the weight ratio of the total content of salt in the emulsified condiment (i.e., total salt content including not only the salt mixed at the time of preparing the composition but also the salt contained in the fine food particles and other optional ingredients) with respect to the total amount of the condiment is preferably 0.1 mass% or more and 20 mass% or less, more preferably 0.2 mass% or more and 7.0 mass% or less, and further preferably 0.3 mass% or more and 5.0 mass% or less.

The condiment of the present invention preferably has a modal diameter of 100 µm or less and consequently has enhanced matte feeling and low uneven feeling of the surface of the condiment discharged from the container to give good appearance. The modal diameter is more preferably 50 µm or less, more preferably 15 µm or less, and most preferably 10 µm or less. If the modal diameter is less than 0.3 µm, the productivity is deteriorated, and ultrafine particles smaller than this value are easily taken into a living body, which may cause allergy. Accordingly, a modal diameter of 0.3 µm or more is efficient and safe in manufacturing, a modal diameter of 1.0 µm or more is further efficient and safe, and a modal diameter of 2.0 µm or more is most efficient and safe.

Although any container may be used for filling the condiment, an extrusion container from which the contents are discharged by extrusion (e.g., container-deforming type, gas-filled type, or pump type), helps to form the surface of the sequentially discharged condiment into the shape of the container mouth, and makes the unevenness of the surface prominently low, thereby giving more beautiful appearance. Thus, the present invention is useful.

The particle diameters in the present invention all refer to those measured on a volume basis, and the measured value of particle diameter represents the result obtained by analyzing a sample after ultrasonication (the ultrasonication disrupts clusters formed from a plurality of fine particles, and the measured value tends to be several times to several tens of times smaller to give a value that is completely different from the particle diameter measured before ultrasonication), unless otherwise limited.

The modal diameter refers to, in a particle size distribution of each channel obtained by measuring the emulsified condiment with a laser diffraction particle size distribution analyzer, the particle diameter of the channel having the largest particle frequency percent. If there are a plurality of channels having exactly the same particle frequency percent, the particle diameter of the channel having the smallest particle diameter among them is adopted. If the particle size distribution is a normal distribution, the modal diameter agrees with the median diameter. If the particle size distribution has a bias, in particular, if the particle size distribution has multiple peaks, the modal diameter is greatly different from the median diameter. The measurement of the particle size distribution of a sample with a laser diffraction particle size distribution analyzer can be performed by, for example, the following method.

As the laser diffraction particle size distribution analyzer, for example, Microtrac MT3300 EXII System available from MicrotracBEL Corp. can be used. Distilled water is used as the solvent for the measurement, and DMS2 (Data Management System version 2, MicrotracBEL Corp.) can be used as the measurement application software. If distilled water is not used as the measurement solvent, the characteristics of the particles in the condiment are modified and cannot be appropriately used as an indicator of the present invention. Accordingly, distilled water is necessarily used as the solvent for the measurement. In the measurement, the cleaning button of the measurement application software is pressed to perform cleaning, the set zero button of the software is then pressed to perform zero adjustment, and a sample can be directly charged until the concentration becomes within an appropriate range by sample loading. After adjustment of the concentration within the range, for a sample not to be subjected to ultrasonication, the result of laser diffraction at a flow rate of 60% and a measurement time of 10 seconds is defined as a measurement value. In a sample to be subjected to ultrasonication, the ultrasonication button of the software is pressed to perform ultrasonication at 40 W for 180 seconds, and defoaming is performed three times. Thereafter, the results of laser diffraction at a flow rate of 60% and a measurement time of 10 seconds is defined as a measurement value.

The measurement can be performed under conditions: distribution display: volume, particle refractive index: 1.60, solvent refractive index: 1.333, measurement upper limit (µm): 2000.00 µm, and measurement lower limit (µm): 0.021 µm.

The particle size distribution for each channel (CH) in the present invention can be measured using the particle diameter for each measurement channel shown in Table 1 below as a standard. The particle diameter specified for each channel is also referred to as "particle diameter of xx channel". The frequency of particles not larger than the particle diameter specified for each channel and larger than the particle diameter specified for the channel with one larger number (in the maximum channel in the measurement range, the measurement lower limit particle diameter) is measured for each channel, and the particle frequency percent of each channel (also referred to as "particle frequency percent of xx channel") can be determined using the total frequency of all channels within the measurement range as the denominator. For example, the particle frequency percent of one channel represents the frequency percent of particles of 2000.00 µm or less and larger than 1826.00 µm.

In the emulsified condiment of the present invention, if pulverization is performed until the maximum particle diameter before ultrasonication is decreased to 30 µm or less, the structure of foodstuffs is destroyed, and undesirable flavor tends to be provided. Accordingly, a method for performing pulverization such that the maximum particle diameter before ultrasonication is larger than 30 µm is preferred. Furthermore, a method for performing pulverization such that the maximum particle diameter before ultrasonication is larger than 100 µm is more preferred.

The maximum particle diameter can be measured by, for example, the following method. That is, with regard to the particle size distribution for each channel obtained by measuring the emulsified condiment with a laser diffraction particle size distribution analyzer, the particle diameter of the channel having the largest particle diameter among the channels in which the particle frequency percent is recognized can be defined as the maximum particle diameter.

In addition, in the particle diameter of the condiment of the present invention, the median diameter after ultrasonication is 70 µm or less, which is preferable because the condiment surface discharged from the container is even better. The median diameter is more preferably 50 µm or less, more preferably 20 µm or less, more preferably 15 µm or less, and most preferably 10 µm or less. In contrast, if the median diameter is less than 0.3 µm, the productivity is deteriorated, and ultrafine particles smaller than this value are easily taken into a living body, which may cause allergy. Accordingly, a median diameter of 0.3 µm or more serves to efficient and safe manufacturing, and a median diameter of 1.0 µm or more serves to further efficient and safe manufacturing.

The median diameter represents the numerical value of the diameter at which accumulated values of particle frequency percent on the larger side and the smaller side are equal to each other when the particle size distribution obtained by measuring the emulsified condiment with a laser diffraction particle size distribution analyzer is divided into two based on the particle diameter, and is also denoted as d50.

In the particle diameter of the condiment of the present invention, the 90% integrated diameter (d90) is 163.0 µm or less, which is preferable because the condiment surface discharged from the container is even better, and the appearance on photo is improved. The 90% integrated diameter is further preferably 150.0 µm or less, further preferably 100 µm or less, further preferably 30 µm or less, and most preferably 10 µm or less. In contrast, if the 90% integrated diameter (d90) is less than 0.4 µm, the productivity is deteriorated, and ultrafine particles smaller than this value are easily taken into a living body, which may cause allergy. Accordingly, a 90% integrated diameter of 0.4 µm or more is efficient in manufacturing, and a 90% integrated diameter of 4.0 µm or more is most efficient. The 90% integrated diameter represents the numerical value of the diameter at which the ratio of accumulated values of particle frequency percent on the larger side and the smaller side is 1:9 when the particle size distribution obtained by measuring the emulsified condiment with a laser diffraction particle size distribution analyzer is divided into two based on the particle diameter, and is also denoted as d90.

In the condiment of the present invention, in addition to the above-mentioned modal diameter and/or median diameter, the arithmetic standard deviation is 60 µm or less, which is preferable because the condiment surface discharged from the container is even better, and the appearance on photo is further improved. The arithmetic standard deviation is more preferably 46 µm or less, particularly preferably 31 µm or less, particularly preferably 15 µm or less, and most preferably 10 µm or less. Furthermore, the proportion of "arithmetic standard deviation/modal diameter" is preferably 10 or less and further preferably 9 or less.

In addition, in a condiment having extremely low arithmetic standard deviation, the manufacturing efficiency is extremely low. Accordingly, an arithmetic standard deviation of 1 µm or more is efficient for manufacturing, 1.5 µm or more is further efficient, and 1.8 µm or more is particularly efficient.

The condiment of the present invention possesses a value defined in the Munsell color system (JIS Z8721) within a specific range, which is preferable because it expresses an effect of enhanced matte feeling, improves attractiveness of appearance of food with the condiment, and enhances appetite. The value is preferably from 6 to 9, further preferably from 7 to 9, and most preferably from 8 to 9. Regarding the value, ideal black with a reflectance of 0 is defined as a value of 0, and ideal white with a perfect reflection is defined as a value of 10. Contrary to general knowledge, a surprising effect that the increased matte feeling is obtained with higher value has not been known so far.

In addition to the value defined in the Munsell color system being within a specific range, the condiment of the present invention possesses a chroma defined in the Munsell color system within a specific range, which is preferable because it suppresses the excessive glossy feeling, and further preferably expresses an effect of enhancing the matte feeling. The chroma is preferably from 1 to 6, further preferably from 2 to 5, and most preferably from 2 to 4. Regarding the chroma, achromatic color is defined as a chroma of 0, and the chroma increases as the characteristics of a specific hue become stronger with the distance from the achromatic color of a zero value. However, the relationship between chroma and matte feeling has not been known so far.

In addition to the value and chroma defined in the Munsell color system being within specific ranges, if the condiment of the present invention possesses a hue defined in the Munsell color system is within a specific range, which is preferable because it suppresses the excessive glossy feeling, and further preferably expresses an effect of enhancing the matte feeling. When the hue is on the counterclockwise side (R direction side) with respect to 0Y (10YR) on the Munsell hue circle (Fig. 1), the glossy feeling is too high to undesirably give appearance with weak matte feeling. When the hue is on clockwise side (G direction side) with respect to 10GY (0G), the glossy feeling is too high to undesirably give appearance with weak matte feeling, and also undesirably, the food on which the condiment is placed does not look appetizing. That is, since the appetite stimulating effect is enhanced when the hue is within a specific range, the hue is preferably from 0Y to 10Y or from 0GY to 10GY, further preferably from 0Y to 10Y, and most preferably from 2.5Y to 10Y.

In the hue, R, Y, G, B, and P are main five hues, and YR, GY, BG, PB, and RP are added thereto as the respective intermediates. These 10 hues are arranged circularly in a clockwise direction as a reference, each of the intervals is further divided into 10 with an equal pace, and a scale is drawn to display as 1Y to 10Y. The entire hue is thus expressed. When the range of hue is described in the present invention, the range is the clockwise range in the table shown in Fig. 1 unless otherwise specified. The boundary part of a main hue, for example, the boundary part between Y and GY can be expressed as 10Y or 0GY. For example, from 0Y to 10Y or from 0GY to 10GY represent a range of hues continuously changing from 0Y to 10Y (or from 0GY to 10GY) (see Fig. 1).

The emulsified condiment of the present invention has physical properties substantially uniformly dispersed without using a stabilizer or an emulsifier as a food additive preparation. The uniformity can be evaluated from the appearance after storage of the condiment for about 12 hours in a static condition. In the emulsified condiment of the present invention, semi-solid properties having slight fluidity at a chilled state of 0°C to 4°C are preferred than properties not having fluidity at all. Specifically, the viscosity value measured with a Bostwick viscometer (measurement temperature: 4°C) is preferably 28.0 cm or less in 10 seconds, more preferably 26.0 cm or less, further preferably 20.0 cm or less, further preferably 10 cm or less, and most preferably 5 cm or less. In addition, if the viscosity value measured with a Bostwick viscometer (measurement temperature: 4°C) is 0.1 cm or more in 10 seconds, discharge properties at use of the condiment are preferably good. The viscosity value of the present invention can be measured with a Bostwick viscometer. Specifically, the viscosity can be measured using a KO-type Bostwick viscometer (manufactured by Fukaya Iron Works Co., Ltd., trough length: 28.0 cm, the Bostwick viscosity, i.e., flow-down distance of sample in the trough is 28.0 cm at the maximum). The viscosity value can be measured with a Bostwick viscometer by placing the device horizontally using a level at the time of measurement, closing the gate, then filling the reservoir with a sample adjusted to 4°C to the full volume, and pressing down the trigger for opening the gate and at the same time starting measurement of time to measure the flow-down distance of the material in the trough when 10 seconds passed.

The condiment of the present invention preferably contains a specific amino acid and/or imino acid. Specifically, the total content of phenylalanine, aspartic acid, glycine, and proline is preferably 500 mg/100 g or more. The content of such an amino acid and/or an imino acid can be adjusted by the food as a raw ingredient and a food additive.

The condiment used in the present invention preferably contains a specific mineral. Specifically, the total content of potassium and magnesium is preferably 25 mg/100 g or more. The content of such a mineral can be adjusted by the food as a raw ingredient and a food additive.

In the condiment used in the present invention, due to rise in health consciousness recent years, a lower content of cholesterol has been preferred. Specifically, the content of cholesterol is preferably 50 mg/100 g or less, more preferably 25 mg/100 g or less, further preferably 10 mg/100 g or less, and most preferably 5 mg/100 g or less. In order to thus decrease the content of cholesterol, it is preferable not to contain egg yolk. There is in the world egg yolk-free mayonnaise in which cholesterol is simply decreased. However, there is not a condiment prepared by treating foods with high shearing force under pressurized conditions for a short period of time as in the present invention.

The condiment of the present invention may contain various foods and food additives that are used in common foods within a range satisfying the constitutional requirements as necessary. Examples thereof include soy source, miso, alcohols, sugars (glucose, sucrose, fructose, high-fructose corn syrup, and high-glucose corn syrup), sugar alcohols (xylitol, erythritol, and maltitol), artificial sweeteners (sucralose, aspartame, saccharin, and acesulfame K), minerals (e.g., calcium, potassium, sodium, iron, zinc, and magnesium, and salts thereof), flavors, pH adjusters (e.g., sodium hydroxide, potassium hydroxide, lactic acid, citric acid, tartaric acid, malic acid, and acetic acid), cyclodextrin, antioxidants (vitamin E, vitamin C, tea extract, green coffee bean extract, chlorogenic acid, spice extract, caffeic acid, rosemary extract, vitamin C palmitate, rutin, quercetin, bayberry extract, and sesame extract). Although emulsifiers (glycerin fatty acid ester, acetic acid monoglyceride, lactic acid monoglyceride, citric acid monoglyceride, diacetyl tartaric acid monoglyceride, succinic acid monoglyceride, polyglyceryl fatty acid ester, polyglyceryl condensed linoleic acid ester, quillaja extract, soybean saponin, tea seed saponin, and sucrose fatty acid ester), colorants, and thickening stabilizers may also be contained, due to the recent rise in nature orientation, the quality in which so-called emulsifier and/or colorant and/or thickening stabilizer (for example, those described as "colorant", "thickening stabilizer", and "emulsifier" in "Table of food additive names for indication" of Food Additives Indication Pocket Book (2011 edition)) are not contained is desirable. In particular, it is preferable not to contain colorants in order to obtain a condiment of natural color. Furthermore, the quality in which food additives (for example, substances described in "Table of food additive names for indication" of Food Additives Indication Pocket Book (2011 edition) used as food additives) are not contained is most desirable.

Since the emulsified condiment of the present invention contains fine food particles of at least one selected from the group consisting of pulses and nuts/seeds as described above and has the above-mentioned composition and color tone, excess glossy feeling is suppressed, and matte feeling is provided. However, the modal diameter and the color tone are adjusted as described above by crushing or pulverizing the ingredients.

More specifically, manufacturing by performing the following steps (a) and (b) is preferable.
(a) a step of mixing raw ingredients including at least one selected from the group consisting of pulses and nuts/seeds, an oil/fat, an organic acid, and water to manufacture a mixture solution adjusted have to a solid content of 8 mass% to 98 mass%, a total content of the oil/fat of 20 mass% or more, and a water content of 20 mass% or more; and
(b) a step of performing pulverization processing of the mixture solution with at least one selected from the group consisting of a medium stirring mill, a high-pressure homogenizer, and a colloid mill until the mixture solution has appearance in which a value is 6 or more and 9 or less, a chroma is 1 or more and 6 or less, and a hue is from 0Y to 10Y or from 0GY to 10GY in a Munsell color system and has a modal diameter of 0.3 µm or more and 100 µm or less and a viscosity value of 28.0 cm or less measured with a Bostwick viscometer at a measurement temperature of 4°C and a measurement time of 10 seconds.

Here, it is preferable to perform rough crushing in advance as pretreatment of the step (b), in the step (a) of manufacturing a mixture solution.

Any crushing or pulverizing method can be used in the present invention as long as the food can be treated by high shearing force under pressurized conditions for a short period of time. Any of devices such as a blender, a mixer, a mill, a kneader, a crusher, a pulverizer, or an attritor may be used; either dry grinding or wet grinding may be performed; and any of high-temperature grinding, normal-temperature grinding, and low-temperature grinding may be performed. For example, as a dry pulverizer, a medium stirring mill such as a dry bead mill or a ball mill (tumbling type, vibration type, etc.), a jet mill, a high-speed rotation impact mill (such as pin mill), a roll mill, or a hammer mill can be used. For example, as a wet pulverizer, a medium stirring mill such as a bead mill or a ball mill (such as a tumbling, vibration, or planetary mill), a roll mill, a colloid mill, a star-burst, or a high-pressure homogenizer can be used. For the emulsified condiment in the wet-crushed state, a colloid mill, a medium stirring mill (a ball mill or a bead mill), or a high-pressure homogenizer can be more suitably used. For example, a high-pressure homogenizer or a medium stirring mill can be preferably used. Specifically, an emulsified condiment having characteristics of the present invention can be preferably obtained by disruption through one-path treatment (usually, the treatment time is less than 30 minutes) with a bead mill pulverizer using beads having a particle diameter of 2 mm or less under pressurized conditions that the outlet pressure is higher than the normal pressure by 0.01 MPa or more (The pressurization is preferably 0.01 MPa or more and 1 MPa or less, further preferably 0.02 MPa or more and 0.50 MPa or less. In addition, the processing under pressurization is preferably performed before and after the shearing processing). Although the conditions of pressurization higher than the normal pressure at the pulverization processing may be produced by any method, in order to preferably obtain pressurized conditions with a medium stirring mill (especially a bead mill pulverizer), a filter with an appropriate size is installed at the processing outlet, and a method for performing processing while adjusting the feed rate of the contents and adjusting the pressurized conditions can preferably perform shearing processing while maintaining the pulverization chamber under pressurized conditions. The pulverization processing is preferably performed in a state where the pressure is adjusted to 0.01 MPa or more, further preferably 0.02 MPa or more, for most of the processing time. In performing the processing with a medium stirring mill, the viscosity value of the contents before the processing measured with a Bostwick viscometer (measurement temperature: 20°C) is 28.0 cm or less in 1 second, which is preferable because the pressure can be easily adjusted. If the pressurized conditions are too severe, the equipment may be damaged. Accordingly, for processing using a medium stirring mill, the upper limit of the pressure in the pulverization processing is preferably 1.0 MPa or less and further preferably 0.50 MPa or less.

In addition, the pulverization processing can be preferably performed under pressurized conditions by performing the pulverization processing with a high-pressure homogenizer. Further suitable processing is possible by performing medium stirring milling before the processing with a high-pressure homogenizer or performing medium stirring milling after the processing with a high-pressure homogenizer. The high-pressure homogenizer may be any disperser that can perform shearing processing under conditions of applying a pressure of 1 MPa or more. For example, PANDA 2K homogenizer (manufactured by Niro Soavi S.P.A.), Cavitron (manufactured by Eurote), or LAB 2000 (manufactured by SMT Co., Ltd.) can be used. As processing conditions, for example, the pulverization processing is preferably performed in a state where the pressure is adjusted to 0.01 MPa or more, further preferably 0.02 MPa or more, and the pulverization processing can be performed by implementing high-pressure homogenization single or multiple times in a state where the pressure is adjusted to 50 MPa or more. In the pulverization processing described above, the food is preferably pulverized in a crushing solvent. If the pressurized conditions are too severe, the equipment may be damaged. Accordingly, for processing using a high-pressure homogenizer, the upper limit of the pressure in the pulverization processing is preferably 200 MPa or less.

In addition, in particular, for a crushing solvent containing water, the value and the chroma tend to be increased by performing pulverization in a state where the water content of the food is lower than the water content of the crushing solvent, which is useful because the value and the chroma can be easily adjusted in the range of the present invention. Specifically, a dried food is preferably subjected to pulverization processing using an oil/fat or water as the crushing solvent. In particular, if a food with a hot taste (such as mustard) is subjected to medium stirring milling in a crushing solvent, since the hot taste quality is excessively enhanced, such a food is preferably separately pulverized and is added after medium stirring milling. The food-containing solvent in which a food is contained in an oil/fat or water before pulverization processing preferably has a viscosity of 20 Pa·s or less. When the viscosity is 8 Pa·s or less, the pulverization processing efficiency is further increased, and such a viscosity is useful. In addition, the viscosity (20°C) of the fine food particle-containing composition is preferably 100 mPa·s or more and more preferably 500 mPa·s or more.

In particular, crushing with a wet bead mill is preferable because it provides high stability quality of hardly causing oil separation when the emulsified condiment is left to stand, compared with other processing methods. The principle thereof is unclear, but it is considered that this is because the particle state of the fine food particles is suitably changed by bead milling. Although the conditions for wet bead milling, such as the bead size and packing rate, outlet mesh size, feed rate of raw ingredient slurry, mill rotational strength, and the system of single pass (one mass) or multiple pass (circulation), may be appropriately selected and adjusted in accordance with the sizes and properties of the foodstuffs and the targeted properties of the emulsified condiment, one pass processing is preferable, and the processing time is further preferably 1 second or more and 90 minutes or less, most preferably 3 seconds or more and 60 minutes or less. Since the effect is plateaued when the processing time exceeds 15 minutes, a processing time of 15 minutes or less is most efficient. The processing time in the present invention refers to the time for shearing the sample to be treated. For example, in a bead mill pulverizer having a pulverization chamber volume of 100 mL and a void rate of 50% excluding the bead volume and allowing the processing solution to be injected, when a sample is subjected to one pass processing at a feed rate of 200 mL/min without circulating the sample, since the empty volume in the pulverization chamber is 50 mL, the sample processing time is 50/200 = 0.25 minutes (15 seconds). In addition, it is preferable to roughly crush the foodstuffs in advance with a jet mill, a pin mill, a stone mill pulverizer, or the like as pretreatment and then perform pulverization processing. Although the principle is unclear, when foodstuff powder having a median diameter of 100 µm or more and 1000 µm or less is subjected to pulverization processing, the adhesivity to the object is further enhanced, and such processing is further preferred. In addition, in the bead mill processing, the material of the beads and the material of the bead mill inner cylinder are preferably the same, and both of the materials are further preferably a zirconia compound.

Although the principle is unclear, the condiment of the present invention has a property of enhancing its matte feeling by being pulverized until the value, chroma, and hue in the Munsell color system are within specific ranges. In particular, the property is notably recognized by performing the pulverization processing with a medium stirring mill and/or a high-pressure homogenizer and/or a colloid mill. Accordingly, as a derivative aspect that focuses on the effect of improving the matte feeling by the pulverization processing in the method for manufacturing a condiment of the present invention, the present invention includes the following invention. Pulverization of foodstuffs and emulsification reaction with the crushing solvents, i.e., an oil/fat, an organic acid, and water are multiply performed by the pulverization processing with at least one selected from the group consisting of a medium stirring mill, a high-pressure homogenizer, and a colloid mill. A liquid condiment having improved matte feeling can be manufactured by implementing this multiple reaction while adjusting the modal diameter and the value, chroma, and hue in the Munsell color system within in specific ranges. In addition, since the shape retention property of the condiment is enhanced by performing the pulverization processing under pressurized conditions, it is possible to manufacture an emulsified condiment that is further easy to use. Although the cause is not clear, it is presumed that high pressure causes some reaction or structural change of the pulverized particles and the emulsified particles.
(1) A method for manufacturing an emulsified condiment including the following steps (a) and (b):
   (a) a step of mixing raw ingredients including at least one selected from the group consisting of pulses and nuts/seeds, an oil/fat, an organic acid, and water to manufacture a mixture solution adjusted to have a water content of 20 mass% or more; and
   (b) a step of performing pulverization processing with at least one selected from the group consisting of a medium stirring mill, a high-pressure homogenizer, and a colloid mill until the mixture solution has appearance in which the value is 6 or more and 9 or less, the chroma is 1 or more and 6 or less, and the hue is from 0Y to 10Y or from 0GY to 10GY in the Munsell color system and has a modal diameter of 0.3 µm or more and 100 µm or less and a viscosity value of 28.0 cm or less measured with a Bostwick viscometer at a measurement temperature of 4°C and a measurement time of 10 seconds.
(2) A method for improving matte feeling of an emulsified condiment including the following steps (a) and (b):
   (a) a step of mixing raw ingredients including at least one selected from the group consisting of pulses and nuts, an oil/fat, an organic acid, and water to manufacture a mixture solution adjusted to have a water content of 20 mass% or more; and
   (b) a step of performing pulverization processing with at least one selected from the group consisting of a medium stirring mill, a high-pressure homogenizer, and a colloid mill until the mixture solution has appearance in which the value is 6 or more and 9 or less, the chroma is 1 or more and 6 or less, and the hue is from 0Y to 10Y or from 0GY to 10GY in the Munsell color system and has a modal diameter of 0.3 µm or more and 100 µm or less and a viscosity value of 28.0 cm or less measured with a Bostwick viscometer at a measurement temperature of 4°C and a measurement time of 10 seconds.
(3) The manufacturing method or the method for improving matte feeling according to (1) or (2), wherein the majority of pulverization processing is performed under pressurized conditions of 0.01 MPa or more.
(4) The manufacturing method or the method for improving matte feeling according to (1) or (2), wherein the pulverization processing in step (b) is performed with a high-pressure homogenizer under pressurized conditions of 50 MPa or more.

### Examples

The present invention will now be more specifically described based on Examples, but these Examples are merely examples for convenience of explanation, and the present invention is not limited to these Examples in any manner.

### [Method for preparing emulsified condiment]

Emulsified condiments were prepared as follows.

Solutions of mixtures of raw ingredients shown in Table 1 were prepared, and pulverization processing was performed under conditions shown in the tables.

### [Method for preparing emulsified condiment samples]

Cabbage, broccoli stalk, cauliflower, and mushroom were heated and then made into paste with a mixer. The saute onion used was a commercial product manufactured by Nihonnousankako Corporation. Milled rice and brown rice flour was heated while stirring with water to form paste. Almond as a nut/seed and soybean, chickpea, and lentil as pulses were each dried and pulverized. Green soybean (soybean that is harvested together with the sheath in an immature state and has green appearance (value: 7, chroma: 8, hue: 5GY in the Munsell color system)) was boiled, taken out of the sheath, dried, and then pulverized. Potato and pumpkin were each peeled off, heated, crushed, dried, and pulverized into a powder. Mustard oil, olive oil, canola oil, salt, alcohol vinegar, white wine vinegar, pure apple vinegar, apple vinegar, mustard powder, citric acid, amazake (rice liquefied by enzyme treatment), and lemon juice were commercial products.

The above-mentioned raw ingredients were sufficiently stirred with a table mixer until the appearance became substantially uniform and were subjected pulverization processing using a high-pressure homogenizer, a medium stirring mill (wet bead mill pulverizer), or a mixing emulsifier under the processing conditions shown in the tables. In the processing with a high-pressure homogenizer, high-pressure homogenization using LAB 2000 (manufactured by SMT Co., Ltd.) under a pressure of 80 MPa was implemented once. In the processing with a medium stirring mill (wet bead mill), a filter of 0.3 mm was installed at the outlet of the wet bead mill pulverizer, the pressurized conditions of the pulverization chamber were adjusted to those shown in the tables immediately after the start of processing by appropriately changing the feed rate, and pulverization processing was performed under constant conditions until the finish of the processing. The pressurized conditions are shown in the columns "Medium stirring mill pressurized condition" and "Homogenizer pressurized condition" in the tables as differential pressures relative to the atmospheric pressure defined as "0". In the emulsification processing with a mixing emulsifier, pulverization processing was performed under the processing conditions shown in the tables using TK homomixer manufactured by Primix Corporation under the atmospheric pressure. When the bead mill processing and the high-pressure homogenizer processing were continuously performed, pulverization processing was performed by combining the above-described methods. The details of implementation of the high-pressure homogenizer processing and the mixing emulsifier processing are shown in the column "Homogenizer processing" in the tables (samples subjected to the medium stirring mill processing only without performing the high-pressure homogenizer processing are represented by "-").

### (1) Particle size distribution (modal diameter, specific surface area, maximum particle diameter)

The particle size distribution of each emulsified condiment was measured using Microtrac MT3300 EX2 system of MicrotracBEL Corp. as a laser diffraction particle size distribution analyzer. Distilled water was used as the solvent for the measurement, and DMS2 (Data Management System version 2, MicrotracBEL Corp.) was used as the measurement application software. In the measurement, the cleaning button of the measurement application software was pressed to perform cleaning, the set zero button of the software was then pressed to perform zero adjustment, and a sample was directly charged until the concentration became within an appropriate range by sample loading. After adjustment of the concentration within the range, in a sample not to be subjected to ultrasonication, the result of laser diffraction at a flow rate of 60% and a measurement time of 10 seconds was defined as a measurement value, and in a sample to be subjected to ultrasonication, the ultrasonication button of the software was pressed to perform ultrasonication at 40 W for 180 seconds, defoaming was performed three times. Thereafter, the result of laser diffraction at a flow rate of 60% and a measurement time of 10 seconds was defined as a measurement value.

The measurement was performed under conditions: distribution display: volume, particle refractive index: 1.60, solvent refractive index: 1.333, measurement upper limit (µm): 2000.00 µm, and measurement lower limit (µm): 0.021 µm.

The particle size distribution for each channel in the present invention was measured using the particle diameter for each measurement channel shown in Table 1 as a standard. The frequency of particles not larger than the particle diameter specified for each channel and larger than the particle diameter specified for the channel with one larger number (in the maximum channel in the measurement range, the measurement lower limit particle diameter) was measured for each channel, and the particle frequency percent of each channel was determined using the total frequency of all channels within the measurement range as the denominator. Specifically, the particle frequency percent of each of 132 channels was measured. Regarding the measurement results, the particle diameter of the channel having a highest particle frequency percent was defined as the modal diameter. If there were a plurality of channels having exactly the same particle frequency percent, the particle diameter of the channel having the smallest particle diameter among them was adopted as the modal diameter. The particle diameter of the channel having the largest particle diameter among the channels in which the particle frequency percent was recognized was adopted as the maximum particle diameter.

**[Table 1]**

| Channel | Particle diameter (µm) | Channel | Particle diameter (µm) | Channel | Particle diameter (µm) | Channel | Particle diameter (µm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

### (2) Viscosity value measured by Bostwick viscometer

The viscosity value measured with a Bostwick viscometer was measured using a KO-type Bostwick viscometer (manufactured by Fukaya Iron Works Co., Ltd.). The viscosity value was measured by placing the device horizontally using a level at the time of measurement, closing the gate, then filling the reservoir with a sample adjusted to 4°C to the full volume, and pressing down the trigger to open the gate and at the same time starting measurement of time to measure the flow-down distance of the material in the trough when 10 seconds passed.

### (3) Hue, (4) Value, (5) Chroma

The hue, value, and chroma in the Munsell color system were measured using "Color ruler by the Munsell system, enhanced version (manufactured by Japan Color Enterprise Co., Ltd.)" in accordance with the ordinary method described in the booklet.

### (6) Matte feeling, (7) Glossy feeling, (8) Delicious and hot taste, (9) Uneven feeling of condiment surface, (10) Shape retention property, (11) Appetite stimulating effect, (12) Attractiveness of appearance of food with condiment, (13) Appearance on photo, (14) Comprehensive evaluation

Emulsified condiment samples prepared in examples and comparative examples were each filled into a pastry bag and squeezed out on a cracker ("Levain (registered trademark) manufactured by Yamazaki Biscuits Co., Ltd.), and were each subjected to a sensory test to evaluate the quality of the color development of the appearance before eating and the taste at the time of eating by a total of ten trained sensory panelists. In this sensory test, nine items: "matte feeling", "glossy feeling", "delicious and hot taste", "uneven feeling of condiment surface", "shape retention property", "appetite stimulating effect", "attractiveness of appearance of food with condiment", "appearance on photo", and "comprehensive evaluation", were each evaluated with five grades. Regarding the "matte feeling", the appearance of condiment squeezed out on a cracker was evaluated with five grades, where 5: preferable with strong matte feeling, 4: slightly preferable with slightly strong matte feeling, 3: moderate, 2: slightly undesirable with slightly weak matte feeling, and 1: undesirable with weak matte feeling. Regarding the "glossy feeling", the appearance of condiment squeezed out on a cracker was evaluated with five grades, where 5: calm appearance with no noticeable glossy feeling, 4: slightly calm appearance with slightly noticeable glossy feeling, 3: moderate, 2: slightly messed appearance with slightly noticeable glossy feeling, and 1: messed appearance with noticeable glossy feeling. Regarding the "uneven feeling of condiment surface", the appearance of condiment squeezed out on a cracker was evaluated with five grades, where 5: presentable with no noticeable unevenness of condiment surface, 4: slightly presentable with slightly unnoticeable unevenness of condiment surface, 3: moderate, 2: slightly unpresentable with slightly noticeable unevenness of condiment surface, and 1: unpresentable with noticeable unevenness of condiment surface. Regarding the "shape retention property", the appearance of condiment squeezed out on a cracker was evaluated with five grades, where 5: preferable with condiment shape hardly collapsing, 4: slightly preferable with condiment shape less likely collapsing, 3: moderate, 2: slightly undesirable with condiment shape slightly easily collapsing, and 1: undesirable with condiment shape easily collapsing.

Regarding the "delicious and hot taste", the taste was evaluated with five grades, where 5: good balance between umami and hot taste and delicious, 4: slightly good balance between umami and hot taste and slightly delicious, 3: moderate, 2: slightly bad balance between umami and hot taste and not very delicious, and 1: bad balance between umami and hot taste and not delicious.

Regarding the "appetite stimulating effect", whether the appearance of a food on which the condiment was placed was appetizing or not was evaluated with five grades, where 5: appetizing, 4: slightly appetizing, 3: moderate, 2: not very appetizing, and 1: not appetizing. Regarding the "attractiveness of appearance of food with condiment", the appearance of a food (cracker in this case) on which the condiment was placed was evaluated with five grades, where 5: looking delicious, 4: looking slightly delicious, 3: moderate, 2: looking not very delicious, and 1: not looking delicious.

Regarding the "appearance on photo", the food on which the condiment was placed was photographed with a digital camera under sufficient illumination, and the photographs were visually evaluated with five grades, where 5: preferable with no noticeable reflection (halation), 4: slightly preferable with slightly unnoticeable reflection (halation), 3: slightly noticeable reflection (halation) within an acceptable range, 2: slightly undesirable with slightly noticeable reflection (halation), and 1: undesirable with noticeable reflection (halation).

Regarding the "comprehensive evaluation", comprehensive deliciousness including appearance was evaluated with five grades, where 5: delicious, 4: slightly delicious, 3: moderate, 2: not very delicious, and 1: not delicious. Each evaluation item was evaluated by a system selecting one number closest to the evaluation by the panelist. Evaluation results were totalized based on the arithmetic mean value of scores of ten panelists.

Regarding the training of the sensory panelists, the following discrimination trainings A) to C) were carried out. Panelists selected were those particularly having excellent results, and having product development experience and a wide variety of knowledge about the quality of foods such as taste and appearance, and being trained by regularly engaging in product appearance evaluation (preservability and palatability) such that the evaluation criteria for each sensory test item have been standardized before evaluation to absolutely evaluate each item, and objective sensory tests were performed by a total of ten panelists.
A) A taste quality discrimination test for five flavors (sweetness: taste of sugar, sourness: taste of tartaric acid, umami: taste of sodium glutamate, saltiness: taste of sodium chloride, and bitterness: taste of caffeine) by producing aqueous solutions of these ingredients having concentrations close to the respective threshold levels and accurately discriminating the respective samples of these tastes from the aqueous solution samples of these flavors and two distilled water samples, i.e., seven samples in total;
B) A concentration difference discrimination test for accurately discriminating concentration differences of sodium chloride aqueous solutions and acetic acid aqueous solutions having slightly different five concentrations; and
C) A three-point discrimination test for accurately discriminating company B soy source from a total of three samples of two soy sources of maker A and one soy source of maker B.

In the examples, "%" represents "mass%" unless otherwise specified.

The obtained results are shown in the tables. In all examples, the maximum particle diameter before ultrasonication was larger than 30 µm.

In addition, in each of Examples 1 to 31, samples containing 2-mm square cut dice onion or grains corn, which exceed the upper limit of the particle size distribution measurement conditions of the present invention and do not affect the measurement values of, for example, the modal diameter, d50, d90, and arithmetic standard deviation after ultrasonication, were prepared and subjected to the sensory evaluation, resulting in no changes in the sensory test results.

In addition, experimental verification was performed by replacing the roasted soybean powder with a roasted almond powder (roasted almond processed into a powder) or amazake (rice liquefied through enzyme treatment by an ordinary method). The same effects as in the case of using roasted soybean powder, such as the matte feeling, glossy feeling, delicious and hot feeling, unevenness of condiment surface, and shape retention property, were obtained.

**[Table 2]**

| **<Prescription>** | | Example 1 | Example 2 | Example 3 | Comparative Example 1 | Example 4 |
|---|---|---|---|---|---|---|
| Cabbage paste | Parts by mass | | 250 | 250 | | |
| Broccoli stalk paste | Parts by mass | | | | | |
| Cauliflower paste | Parts by mass | | | | | |
| Mustard oil | Parts by mass | | | | 0.5 | |
| Mustard powder (manufactured by Colman's) | Parts by mass | 8 | 7 | 8 | | |
| Quinoa paste | Parts by mass | | | | | |
| Milled rice paste | Parts by mass | | | | | |
| Brown rice paste | Parts by mass | | | | | |
| Saute onion (manufactured by Nihonnousankako Corporation) | Parts by mass | 5 | 40 | 50 | | |
| Mushroom paste | Parts by mass | | 30 | | | |
| Kelp stock | Parts by mass | 500 | | | | |
| Potato powder | Parts by mass | 40 | 10 | | | |
| Roasted soybean powder | Parts by mass | 70 | 70 | 70 | 100 | 200 |
| Green soybean powder | Parts by mass | | | | | |
| Roasted chickpea powder, low pulverization | Parts by mass | | | | | |
| Roasted lentil powder, low pulverization | Parts by mass | | | | | |
| Olive oil (manufactured by BOSCO) | Parts by mass | | 40 | | | 240 |
| Canola oil (manufactured by Nisshin Oillio Group, Ltd.) | Parts by mass | 300 | 250 | 300 | 300 | |
| Salt | Parts by mass | 15 | 15 | 15 | 15 | 15 |
| Alcohol vinegar (acidity: 10%) (manufactured by Mizkan Co., Ltd.) | Parts by mass | | | | 40 | 40 |
| White wine vinegar (acidity: 5%) (manufactured by Mizkan Co., Ltd.) | Parts by mass | 80 | | 80 | | |
| Pure apple vinegar (acidity: 5%) (manufactured by Mizkan Co., Ltd.) | Parts by mass | | 90 | | | |
| Apple vinegar (acidity: 5%) (manufactured by Mizkan Co., Ltd.) | Parts by mass | | | | | |
| Water | Parts by mass | Balance | Balance | Balance | Balance | Balance |
| Total | Parts by mass | 1000 | 1000 | 1000 | 1000 | 1000 |
| **<Pulverization processing>** | | | | | | |
| Pulverization method | | High-pressure homogenizer | High-pressure homogenizer | Wet bead mill | High-pressure homogenizer | High-pressure homogenizer |
| Medium stirring mill, bead size | **mm** | 1 | 1 | 1 | - | - |
| Medium stirring mill, rotational speed | **rpm** | 4000 | 4000 | 4000 | - | - |
| Medium stirring mill, processing time | **Sec** | 9 | 9 | 18 | - | - |
| Medium stirring mill, pressurized condition (immediately after the start) | **MPa** | 0.05 | 0.08 | 0.07 | - | - |
| Medium stirring mill, pressurized condition (at the time of completion of processing) | **MPa** | 0.08 | 0.09 | 0.07 | - | - |
| Homogenizer processing | | Done before bead mill processing | Done before bead mill processing | - | Done | Done |
| Homogenizer, pressurized condition | **MPa** | 133 | 107 | - | 133 | 133 |

| Sterilization condition | | Reached temperature of 85°C | Reached temperature of 85°C | Reached temperature of 85°C | Reached temperature of 85°C | Reached temperature of 85°C |
|---|---|---|---|---|---|---|
| Processing condition after sterilization | | | | | | |

| **<Analysis value>** | | | | | | |
|---|---|---|---|---|---|---|
| Bostwick viscometer measurement value | cm/10 sec (4°C) | 1.0 | 1.0 | 22.0 | 1.0 | 1.0 |
| Hue | 0Y to 10Y, 0GY to 10GY | 10Y | 10Y | 10Y | 5Y | 5Y |
| Value | 6 to 9 | 9.0 | 9.0 | 9.0 | 9.0 | 9.0 |
| Chroma | 1 to 6 | 3.0 | 4.0 | 6.0 | 0.0 | 1.0 |
| d90 after ultrasonication | µm | 4.6 | 5.8 | 118.6 | 10.1 | 9.5 |
| d50 after ultrasonication | µm | 3.0 | 2.9 | 6.4 | 4.6 | 4.1 |
| Modal diameter after ultrasonication | µm | 3.3 | 3.0 | 4.6 | 3.0 | 2.8 |
| Arithmetic standard deviation | | 1.6 | 1.5 | 39.0 | 2.8 | 2.3 |
| Arithmetic standard deviation/modal diameter | | 0.5 | 0.5 | 8.4 | 0.9 | 0.8 |
| **<Sensory evaluation result>** | | | | | | |
| Matte feeling | | 5 | 5 | 5 | 1 | 5 |
| Glossy feeling | | 5 | 4 | 4 | 1 | 5 |
| Appearance of food with condiment | | 5 | 5 | 5 | 2 | 4 |
| Appearance on photo | | 5 | 5 | 4 | 2 | 5 |
| Shape retention property | | 5 | 5 | 4 | 2 | 5 |
| Delicious and hot taste | | 3 | 5 | 5 | 1 | 3 |
| Uneven feeling of condiment surface | | 5 | 4 | 4 | 3 | 3 |
| Appetite stimulating effect | | 5 | 5 | 3 | 1 | 3 |
| Comprehensive evaluation | | 4 | 4 | 4 | 1 | 3 |

**[Table 3]**

| **<Prescription>** | | Example 5 | Example 6 | Example 7 |
|---|---|---|---|---|
| Cabbage paste | Parts by mass | 250 | 250 | |
| Broccoli stalk paste | Parts by mass | | | |
| Cauliflower paste | Parts by mass | | | |
| Mustard oil | Parts by mass | | | |
| Mustard powder (manufactured by Colman's) | Parts by mass | 8 | 8 | 8 |
| Quinoa paste | Parts by mass | | | |
| Milled rice paste | Parts by mass | | | |
| Brown rice paste | Parts by mass | | | 250 |
| Saute onion (manufactured by Nihonnousankako Corporation) | Parts by mass | 50 | 50 | 50 |
| Mushroom paste | Parts by mass | | | |
| Kelp stock | Parts by mass | | | |
| Potato powder | Parts by mass | | | |
| Roasted soybean powder | Parts by mass | 70 | 70 | 70 |
| Green soybean powder | Parts by mass | | | |
| Roasted chickpea powder, low pulverization | Parts by mass | | | |
| Roasted lentil powder, low pulverization | Parts by mass | | | |
| Olive oil (manufactured by BOSCO) | Parts by mass | | | |
| Canola oil (manufactured by Nisshin Oillio Group, Ltd.) | Parts by mass | 300 | 300 | 300 |
| Salt | Parts by mass | 15 | 15 | 15 |
| Alcohol vinegar (acidity: 10%) (manufactured by Mizkan Co., Ltd.) | Parts by mass | | | |
| White wine vinegar (acidity: 5%) (manufactured by Mizkan Co., Ltd.) | Parts by mass | | | 80 |
| Pure apple vinegar (acidity: 5%) (manufactured by Mizkan Co., Ltd.) | Parts by mass | | 80 | |
| Apple vinegar (acidity: 5%) (manufactured by Mizkan Co., Ltd.) | Parts by mass | 80 | | |
| Water | Parts by mass | Balance | Balance | Balance |
| Total | Parts by mass | 1000 | 1000 | 1000 |

| **<Pulverization processing>** | | | | |
|---|---|---|---|---|
| Pulverization method | | Wet bead mill | Wet bead mill | High-pressure homogenizer |
| Medium stirring mill, bead size | **mm** | 1 | 1 | - |
| Medium stirring mill, rotational speed | **rpm** | 4000 | 4000 | - |
| Medium stirring mill, processing time | **Sec** | 9 | 9 | - |
| Medium stirring mill, pressurized condition (immediately after the start) | **MPa** | 0.07 | 0.07 | - |
| Medium stirring mill, pressurized condition (at the time of completion of processing) | **MPa** | 0.07 | 0.07 | - |
| Homogenizer processing | | - | - | Done |
| Homogenizer, pressurized condition | **MPa** | - | - | 133 |

| Sterilization condition | | Reached temperature of 85°C | Reached temperature of 85°C | Reached temperature of 85°C |
|---|---|---|---|---|
| Processing condition after sterilization | | | | |

| **<Analysis value>** | | | | |
|---|---|---|---|---|
| Bostwick viscometer measurement value | cm/10 sec (4°C) | 12.0 | 12.0 | 8.0 |
| Hue | 0Y to 10Y, 0GY to 10GY | 10Y | 10Y | 5Y |
| Value | 6 to 9 | 9.0 | 8.0 | 9.0 |
| Chroma | 1 to 6 | 3.0 | 4.0 | 3.0 |
| d90 after ultrasonication | µm | 162.4 | 121.0 | 110.1 |
| d50 after ultrasonication | µm | 8.3 | 6.9 | 6.8 |
| Modal diameter after ultrasonication | µm | 6.0 | 5.0 | 5.0 |
| Arithmetic standard deviation | | 58.4 | 41.1 | 36.9 |
| Arithmetic standard deviation/modal diameter | | 9.7 | 8.1 | 7.3 |

| **<Sensory evaluation result>** | | | | |
|---|---|---|---|---|
| Matte feeling | | 5 | 4 | 5 |
| Glossy feeling | | 4 | 4 | 4 |
| Appearance of food with condiment | | 5 | 5 | 5 |
| Appearance on photo | | 4 | 4 | 4 |
| Shape retention property | | 4 | 4 | 4 |
| Delicious and hot taste | | 5 | 5 | 4 |
| Uneven feeling of condiment surface | | 3 | 4 | 4 |
| Appetite stimulating effect | | 5 | 5 | 5 |
| Comprehensive evaluation | | 4 | 5 | 4 |

**[Table 4]**

| **<Prescription>** | | Example 8 | Comparative Example 2 | Comparative Example 3 | Comparative Example 4 | Example 9 | Example 10 | Example 11 | Comparative Example 5 |
|---|---|---|---|---|---|---|---|---|---|
| Cabbage paste | Parts by mass | | Same as Example 8 | | | | | | |
| Broccoli stalk paste | Parts by mass | | | | | | | | |
| Cauliflower paste | Parts by mass | 250 | | | | | | | |
| Mustard oil | Parts by mass | | | | | | | | |
| Mustard powder (manufactured by Colman's) | Parts by mass | 8 | | | | | | | |
| Quinoa paste | Parts by mass | | | | | | | | |
| Milled rice paste | Parts by mass | | | | | | | | |
| Brown rice paste | Parts by mass | | | | | | | | |
| Saute onion (manufactured by Nihonnousankako Corporation) | Parts by mass | 50 | | | | | | | |
| Mushroom paste | Parts by mass | | | | | | | | |
| Kelp stock | Parts by mass | | | | | | | | |
| Potato powder | Parts by mass | | | | | | | | |
| Roasted soybean powder | Parts by mass | 70 | | | | | | | |
| Green soybean powder | Parts by mass | | | | | | | | |
| Roasted chickpea powder, low pulverization | Parts by mass | | | | | | | | |
| Roasted lentil powder, low | Parts by mass | | | | | | | | |
| pulverization Olive oil (manufactured by BOSCO) | Parts by mass | | | | | | | | |
| Canola oil (manufactured by Nisshin Oillio Group, Ltd.) | Parts by mass | 300 | | | | | | | |
| Salt | Parts by mass | 15 | | | | | | | |
| Alcohol vinegar (acidity: 10%) (manufactured by Mizkan Co., Ltd.) | Parts by mass | | | | | | | | |
| White wine vinegar (acidity: 5%) (manufactured by Mizkan Co., Ltd.) | Parts by mass | 80 | | | | | | | |
| Pure apple vinegar (acidity: 5%) (manufactured by Mizkan Co., Ltd.) | Parts by mass | | | | | | | | |
| Apple vinegar (acidity: 5%) (manufactured by Mizkan Co., Ltd.) | Parts by mass | | | | | | | | |
| Water | Parts by mass | Balance | | | | | | | |
| Total | Parts by mass | 1000 | | | | | | | |

| **<Pulverization processing>** | | | | | | | | | |
|---|---|---|---|---|---|---|---|---|---|
| Pulverization method | | High-pressure homogenizer | | | | | | | |
| Medium stirring mill, bead size | **mm** | - | | | | | | | |
| Medium stirring mill, rotational speed | **rpm** | - | | | | | | | |
| Medium stirring mill, processing time | **Sec** | - | | | | | | | |
| Medium stirring mill, pressurized condition (immediately after the start) | **MPa** | - | | | | | | | |
| Medium stirring mill, pressurized condition (at the time of completion of processina) | **MPa** | - | | | | | | | |
| Homogenizer processing | | Done | | | | | | | |
| Homogenizer, pressurized condition | **MPa** | 133 | | | | | | | |
| Sterilization condition | | Reached temperature of 85°C | | | | | | | |
| Processing condition after sterilization | | | Condiment of Example 8 was stored under an illumination of 25000 lux for 30 days | Techno Color Green L (manufactured by Mitsubishi-Chemical Foods Corporation) was added to the condiment of Example 8 to adjust thehue to 5G | San Red RCFU (manufactured by San-Ei Gen F.F.I. Inc.) was added to the condiment of Example 8 to adjust the hue to 5YR | Caramel dye was added to the condiment of Example 8 to adjust the value to 8 | Caramel dye was added to the condiment of Example 8 to adjust the value to 7 | Caramel dye was added to the condiment of Example 8 to adjust the value to 6 | Caramel dye was added to the condiment of Example 8 to adjust the value to 5 |
| **<Analysis value>** | | | | | | | | | |
| Bostwick viscometer measurement value | cm/10 sec (4°C) | 16.0 | Same as Example 8 | | | | | | |
| Hue | 0Y to 10Y, 0GY to 10GY | 5Y | 5Y | 5G | 5YR | 5Y | 5Y | 5Y | 5Y |
| Value | 6 to 9 | 9.0 | 9.0 | 9.0 | 9.0 | 8.0 | 7.0 | 6.0 | 5.0 |
| Chroma | 1 to 6 | 4.0 | 0.5 | 4.0 | 4.0 | 4.0 | 4.0 | 4.0 | 4.0 |
| d90 after ultrasonication | µm | 136.0 | Same as Example 8 | | | | | | |
| d50 after ultrasonication | µm | 16.3 | | | | | | | |
| Modal diameter after ultrasonication | µm | 13.1 | | | | | | | |
| Arithmetic standard deviation | | 44.7 | | | | | | | |
| Arithmetic standard deviation/modal diameter | | 3.4 | | | | | | | |

| **<Sensory evaluation result>** | | | | | | | | | |
|---|---|---|---|---|---|---|---|---|---|
| Matte feeling | | 5 | 5 | 4 | 4 | 5 | 4 | 4 | 2 |
| Glossy feeling | | 4 | 1 | 1 | 1 | 4 | 4 | 4 | 3 |
| Appearance of food with condiment | | 5 | 5 | 2 | 2 | 5 | 5 | 5 | 4 |
| Appearance on photo | | 4 | 4 | 2 | 2 | 4 | 4 | 4 | 2 |
| Shape retention property | | 4 | 4 | 4 | 4 | 4 | 4 | 4 | 4 |
| Delicious and hot taste | | 5 | 5 | 5 | 5 | 5 | 5 | 5 | 5 |
| Uneven feeling of condiment surface | | 3 | 3 | 3 | 3 | 3 | 3 | 3 | 3 |
| Appetite stimulating effect | | 5 | 5 | 1 | 2 | 5 | 5 | 5 | 4 |
| Comprehensive evaluation | | 5 | 2 | 1 | 1 | 5 | 4 | 3 | 2 |

**[Table 5]**

| **<Prescription>** | | Comparative Example 6 | Comparative Example 7 |
|---|---|---|---|
| Cabbage paste | Parts by mass | | |
| Broccoli stalk paste | Parts by mass | | |
| Cauliflower paste | Parts by mass | | |
| Mustard oil | Parts by mass | | |
| Mustard powder (manufactured by Colman's) | Parts by mass | 8 | 8 |
| Quinoa paste | Parts by mass | 250 | |
| Milled rice paste | Parts by mass | | 250 |
| Brown rice paste | Parts by mass | | |
| Saute onion (manufactured by Nihonnousankako Corporation) | Parts by mass | 50 | 50 |
| Mushroom paste | Parts by mass | | |
| Kelp stock | Parts by mass | | |
| Potato powder | Parts by mass | | |
| Roasted soybean powder | Parts by mass | 70 | 70 |
| Green soybean powder | Parts by mass | | |
| Roasted chickpea powder, low pulverization | Parts by mass | | |
| Roasted lentil powder, low pulverization | Parts by mass | | |
| Olive oil (manufactured by BOSCO) | Parts by mass | | |
| Canola oil (manufactured by Nisshin Oillio Group, Ltd.) | Parts by mass | 300 | 300 |
| Salt | Parts by mass | 15 | 15 |
| Alcohol vinegar (acidity: 10%) (manufactured by Mizkan Co., Ltd.) | Parts by mass | | |
| White wine vinegar (acidity: 5%) (manufactured by Mizkan Co., Ltd.) | Parts by mass | 80 | 80 |
| Pure apple vinegar (acidity: 5%) (manufactured by Mizkan Co., Ltd.) | Parts by mass | | |
| Apple vinegar (acidity: 5%) (manufactured by Mizkan Co., Ltd.) | Parts by mass | | |
| Water | Parts by mass | Balance | Balance |
| Total | Parts by mass | 1000 | 1000 |

| **<Pulverization processing>** | | | |
|---|---|---|---|
| Pulverization method | | TK homomixer | TK homomixer |
| Medium stirring mill, bead size | **mm** | - | - |
| Medium stirring mill, rotational speed | **rpm** | - | - |
| Medium stirring mill, processing time | **Sec** | - | - |
| Medium stirring mill, pressurized condition (immediately after the start) | **MPa** | - | - |
| Medium stirring mill, pressurized condition (at the time of completion of processing) | **MPa** | - | - |
| Homogenizer processing | | Done | Done |
| Homogenizer, pressurized condition | **MPa** | 0 | 0 |
| Sterilization condition | | Reached temperature of 85°C | Reached temperature of 85°C |
| Processing condition after sterilization | | | |

| **<Analysis value>** | | | |
|---|---|---|---|
| Bostwick viscometer measurement value | cm/10 sec (4°C) | Higher than 28 | Higher than 28 |
| Hue | 0Y to 10Y, 0GY to 10GY | 5Y | 5Y |
| Value | 6 to 9 | 9.0 | 9.0 |
| Chroma | 1 to 6 | 2.0 | 1.0 |
| d90 after ultrasonication | µm | 122.2 | 135.1 |
| d50 after ultrasonication | µm | 9.6 | 7.5 |
| Modal diameter after ultrasonication | µm | 5.0 | 5.5 |
| Arithmetic standard deviation | | 38.6 | 44.1 |
| Arithmetic standard deviation/modal diameter | | 7.7 | 8.0 |
| **<Sensory evaluation result>** | | | |
| Matte feeling | | 5 | 1 |
| Glossy feeling | | 5 | 1 |
| Appearance of food with condiment | | 5 | 2 |
| Appearance on photo | | 4 | 3 |
| Shape retention property | | 2 | 1 |
| Delicious and hot taste | | 4 | 3 |
| Uneven feeling of condiment surface | | 4 | 4 |
| Appetite stimulating effect | | 5 | 3 |
| Comprehensive evaluation | | 4 | 2 |

**[Table 6]**

| **<Prescription>** | | Example 12 | Comparative Example 8 | Comparative Example 9 | Comparative Example 10 | Example 13 | Example 14 | Example 15 | Comparative Example 11 |
|---|---|---|---|---|---|---|---|---|---|
| Cabbage paste | Parts by mass | | Same as Example 12 | | | | | | |
| Broccoli stalk paste | Parts by mass | 250 | | | | | | | |
| Cauliflower paste | Parts by mass | | | | | | | | |
| Mustard oil | Parts by mass | | | | | | | | |
| Mustard powder (manufactured by Colman's) | Parts by mass | 8 | | | | | | | |
| Quinoa paste | Parts by mass | | | | | | | | |
| Milled rice paste | Parts by mass | | | | | | | | |
| Brown rice paste | Parts by mass | | | | | | | | |
| Saute onion (manufactured by Nihonnousankako Corporation) | Parts by mass | 50 | | | | | | | |
| Mushroom paste | Parts by mass | | | | | | | | |
| Kelp stock | Parts by mass | | | | | | | | |
| Potato powder | Parts by mass | | | | | | | | |
| Roasted soybean powder | Parts by mass | 70 | | | | | | | |
| Green soybean powder | Parts by mass | | | | | | | | |
| Roasted chickpea powder, low pulverization | Parts by mass | | | | | | | | |
| Roasted lentil powder, low pulverization | Parts by mass | | | | | | | | |
| Olive oil (manufactured by BOSCO) | Parts by mass | | | | | | | | |
| Canola oil (manufactured by Nisshin Oillio Group, Ltd.) | Parts by mass | 300 | | | | | | | |
| Salt | Parts by mass | 15 | | | | | | | |
| Alcohol vinegar (acidity: 10%) (manufactured by Mizkan Co., Ltd.) | Parts by mass | | | | | | | | |
| White wine vinegar (acidity: 5%) (manufactured by Mizkan Co., Ltd.) | Parts by mass | 80 | | | | | | | |
| Pure apple vinegar (acidity: 5%) (manufactured by Mizkan Co., Ltd.) | Parts by mass | | | | | | | | |
| Apple vinegar (acidity: 5%) (manufactured by Mizkan Co., Ltd.) | Parts by mass | | | | | | | | |
| Water | Parts by mass | Balance | | | | | | | |
| Total | Parts by mass | 1000 | | | | | | | |

| **<Pulverization processing>** | | | | | | | | | |
|---|---|---|---|---|---|---|---|---|---|
| Pulverization method | | High-pressure homogenizer | | | | | | | |
| Medium stirring mill, bead size | **mm** | - | | | | | | | |
| Medium stirring mill, rotational speed | **rpm** | - | | | | | | | |
| Medium stirring mill, processing time | **Sec** | - | | | | | | | |
| Medium stirring mill, pressurized condition (immediately after the start) | **MPa** | - | | | | | | | |
| Medium stirring mill, pressurized condition (at the time of completion of processing) | **MPa** | - | | | | | | | |
| Homogenizer processing | | Done | | | | | | | |
| Homogenizer, pressurized condition | **MPa** | 133 | | | | | | | |
| Sterilization condition | | Reached temperature of 85°C | | | | | | | |
| Processing condition after sterilization | | | condiment of Example 12 was stored under an illumination of 25000 lux for 30 days | Techno Color Green L (manufacture d by Mitsubishi-Chemical Foods Corporation) was added to the condiment of Example 12 to adjust the hue to 5G | San Red RCFU (manufactured by San-Ei Gen F.F.I. Inc.) was added to the condiment of Example 12 to adjust the hue to 5YR | Caramel dye was added to the condiment of Example 12 to adjust the value to 8 | Caramel dye was added to the condiment of Example 12 to adjust the value to 7 | Caramel dye was added to the condiment of Example 12 to adjust the value to 6 | Caramel dye was added to the condiment of Example 12 to adjust the value to 5 |

| **<Analysis value>** | | | | | | | | | |
|---|---|---|---|---|---|---|---|---|---|
| Bostwick viscometer measurement value | cm/10 sec (4°C) | 8.0 | Same as Example 12 | | | | | | |
| Hue | 0Y to 10Y, 0GY to 10GY | 5GY | 5GY | 5G | 5YR | 5GY | 5GY | 5GY | 5GY |
| Value | 6 to 9 | 9.0 | 9.0 | 9.0 | 9.0 | 8.0 | 7.0 | 6.0 | 5.0 |
| Chroma | 1 to 6 | 4.0 | 0.5 | 4.0 | 4.0 | 4.0 | 4.0 | 4.0 | 4.0 |
| d90 after ultrasonication | µm | 128.4 | Same as Example 12 | | | | | | |
| d50 after ultrasonication | µm | 8.3 | | | | | | | |
| Modal diameter after ultrasonication | µm | 5.5 | | | | | | | |
| Arithmetic standard deviation | | 42.3 | | | | | | | |
| Arithmetic standard deviation/modal diameter | | 7.7 | | | | | | | |

| **<Sensory evaluation result>** | | | | | | | | | |
|---|---|---|---|---|---|---|---|---|---|
| Matte feeling | | 5 | 5 | 4 | 4 | 5 | 4 | 4 | 2 |
| Glossy feeling | | 4 | 1 | 1 | 1 | 4 | 4 | 4 | 3 |
| Appearance of food with condiment | | 4 | 3 | 2 | 2 | 4 | 4 | 4 | 2 |
| Appearance on photo | | 4 | 4 | 1 | 2 | 4 | 4 | 4 | 2 |
| Shape retention property | | 4 | 4 | 4 | 4 | 4 | 4 | 4 | 4 |
| Delicious and hot taste | | 5 | 5 | 5 | 5 | 5 | 5 | 5 | 5 |
| Uneven feeling of condiment surface | | 4 | 4 | 4 | 4 | 4 | 4 | 4 | 4 |
| Appetite stimulating effect | | 5 | 5 | 1 | 2 | 5 | 5 | 5 | 4 |
| Comprehensive evaluation | | 5 | 5 | 1 | 1 | 5 | 4 | 3 | 2 |

**[Table 7]**

| **<Prescription>** | | Example 16 | Example 17 | Example 18 | Example 19 | Example 20 | Example 21 |
|---|---|---|---|---|---|---|---|
| Cabbage paste | Parts by mass | 250 | Same as Example 16 | | | | 250 |
| Broccoli stalk paste | Parts by mass | | | | | | |
| Cauliflower paste | Parts by mass | | | | | | |
| Mustard oil | Parts by mass | | | | | | |
| Mustard powder (manufactured by Colman's) | Parts by mass | 7 | | 8 | 0.4 | | |
| Quinoa paste | Parts by mass | | | | | | |
| Milled rice paste | Parts by mass | | | | | | |
| Brown rice paste | Parts by mass | | | | | | |
| Saute onion (manufactured by Nihonnousankako Corporation) | Parts by mass | 40 | | 50 | 50 | 50 | |
| Mushroom paste | Parts by mass | | | | | | |
| Kelp stock | Parts by mass | | | | 500 | | |
| Potato powder | Parts by mass | | | | | | |
| Roasted soybean powder | Parts by mass | | | | | 70 | |
| Green soybean powder | Parts by mass | 70 | | | | | |
| Roasted chickpea powder, low pulverization | Parts by mass | | | | 300 | | |
| Roasted lentil powder, low pulverization | Parts by mass | | | 15 | | | |
| Olive oil (manufactured by BOSCO) | Parts by mass | 20 | | | | | |
| Canola oil (manufactured by Nisshin Oillio Group, Ltd.) | Parts by mass | 300 | | 300 | 300 | 300 | |
| Salt | Parts by mass | 15 | | 15 | 15 | 15 | |
| Alcohol vinegar (acidity: 10%) (manufactured by Mizkan Co., Ltd.) | Parts by mass | | | | 20 | | |
| White wine vinegar (acidity: 5%) (manufactured by Mizkan Co., Ltd.) | Parts by mass | | | 80 | | 80 | |
| Pure apple vinegar (acidity: 5%) (manufactured by Mizkan Co., Ltd.) | Parts by mass | 90 | | | | | |
| Apple vinegar (acidity: 5%) (manufactured by Mizkan Co., Ltd.) | Parts by mass | | | | | | |
| Water | Parts by mass | Balance | | Balance | Balance | Balance | |
| Total | Parts by mass | 1000 | | | 1000 | 1000 | 1000 |
| **<Pulverization processing>** | | | | | | | |
| Pulverization method | | Wet bead mill | | | High-pressure homogenizer | Wet bead mill | High-pressure homogenizer |
| Medium stirring mill, bead size | mm | 2 | | | - | 1 | - |
| Medium stirring mill, rotational speed | **rpm** | 2000 | | | - | 3000 | - |
| Medium stirring mill, processing time | **Sec** | 3600 | | | - | 18 | - |
| Medium stirring mill, pressurized condition (immediately after the start) | **MPa** | 0.40 | | | - | 0.07 | - |
| Medium stirring mill, pressurized condition (at the time of completion of processing) | **MPa** | 0.48 | | | - | 0.08 | - |
| Homogenizer processing | | - | | | Done | - | Done |
| Homogenizer, pressurized condition | **MPa** | - | | | 133 | - | 133 |
| Sterilization condition | | Reached temperature of 85°C | | | Reached temperature of 85°C | Reached temperature of 85°C | Reached temperature of 85°C |
| Processing condition after sterilization | | | Condiment of Example 16 was stored under an illumination of 25000 lux for 10 days | Condiment of Example 16 was stored at 40°C for 10 days | | | |

| **<Analysis value>** | | | | | | | |
|---|---|---|---|---|---|---|---|
| Bostwick viscometer measurement value | cm/10 sec (4°C) | 2.0 | Same as Example 16 | | 16.0 | 6.0 | 5.0 |
| Hue | 0Y to 10Y, 0GY to 10GY | 10Y | 10Y | 10Y | 10Y | 2.5Y | 10Y |
| Value | 6 to 9 | 8.0 | 9.0 | 7.0 | 8.0 | 8.0 | 9.0 |
| Chroma | 1 to 6 | 4.0 | 2.0 | 4.0 | 4.0 | 3.0 | 6.0 |
| d90 after ultrasonication | µm | 103.1 | Same as Example 16 | | 150.5 | 143.6 | 124.3 |
| d50 after ultrasonication | µm | 6.0 | | | 9.2 | 9.0 | 7.3 |
| Modal diameter after ultrasonication | µm | 4.2 | | | 7.1 | 7.8 | 5.0 |
| Arithmetic standard deviation | | 33.4 | | | 45.0 | 42.4 | 43.4 |
| Arithmetic standard deviation/modal diameter | | 7.9 | | | 6.3 | 5.5 | 8.6 |

| **<Sensory evaluation result>** | | | | | | | |
|---|---|---|---|---|---|---|---|
| Matte feeling | | 4 | 5 | 4 | 4 | 4 | 5 |
| Glossy feeling | | 3 | 5 | 4 | 4 | 4 | 4 |
| Appearance of food with condiment | | 5 | 5 | 5 | 5 | 5 | 4 |
| Appearance on photo | | 5 | 4 | 4 | 4 | 4 | 4 |
| Shape retention property | | 5 | 5 | 5 | 4 | 4 | 5 |
| Delicious and hot taste | | 5 | 5 | 5 | 3 | 3 | 5 |
| Uneven feeling of condiment surface | | 5 | 5 | 5 | 3 | 3 | 4 |
| Appetite stimulating effect | | 5 | 5 | 5 | 5 | 5 | 3 |
| Comprehensive evaluation | | 5 | 5 | 5 | 4 | 4 | 3 |

**[Table 8]**

| **<Prescription>** | | Comparative Example 12 | Example 22 | Example 23 | Example 24 | Comparative Example 13 | Example 25 | Example 26 |
|---|---|---|---|---|---|---|---|---|
| Cabbage paste | Parts by mass | 300 | 300 | 300 | 300 | | | |
| Broccoli stalk paste | Parts by mass | | | | | | | |
| Cauliflower paste | Parts by mass | | | | | | | |
| Mustard oil | Parts by mass | | | | | | | |
| Mustard powder (manufactured by Colman's) | Parts by mass | 6 | 6 | 6 | 6 | 8 | 8 | 8 |
| Quinoa paste | Parts by mass | | | | | | | |
| Milled rice paste | Parts by mass | | | | | | | |
| Brown rice paste | Parts by mass | | | | | | | |
| Saute onion (manufactured by Nihonnousankako Corporation) | Parts by mass | | | | | 5 | 5 | 5 |
| Mushroom paste | Parts by mass | | | | | | | |
| Kelp stock | Parts by mass | | | | | 500 | 500 | 500 |
| Potato powder | Parts by mass | | | | | 40 | 40 | 40 |
| Roasted soybean powder | Parts by mass | 65 | 65 | 65 | 65 | 70 | 70 | 70 |
| Green soybean powder | Parts by mass | | | | | | | |
| Roasted chickpea powder, low pulverization | Parts by mass | | | | | | | |
| Roasted lentil powder, low pulverization | Parts by mass | | | | | | | |
| Olive oil (manufactured by BOSCO) | Parts by mass | | | | | | | |
| Canola oil (manufactured by Nisshin Oillio Group, Ltd.) | Parts by mass | 300 | 300 | 300 | 300 | 300 | 300 | 300 |
| Salt | Parts by mass | 9 | 9 | 9 | 9 | 15 | 15 | 15 |
| Alcohol vinegar (acidity: 10%) (manufactured by Mizkan Co., Ltd.) | Parts by mass | | | | | | | |
| White wine vinegar (acidity: 5%) (manufactured by Mizkan Co., Ltd.) | Parts by mass | | | | | 80 | 80 | 80 |
| Pure apple vinegar (acidity: 5%) (manufactured by Mizkan Co., Ltd.) | Parts by mass | 100 | 100 | 100 | 100 | | | |
| Apple vinegar (acidity: 5%) (manufactured by Mizkan Co., Ltd.) | Parts by mass | | | | | | | |
| Water | Parts by mass | Balance | Balance | Balance | Balance | Balance | Balance | Balance |
| Total | Parts by mass | 1000 | 1000 | 1000 | 1000 | 1000 | 1000 | 1000 |
| **<Pulverization processing>** | | | | | | | | |
| Pulverization method | | None | Wet bead mill | Wet bead mill | Wet bead mill | None | Wet bead mill | High-pressure homogenizer |
| Medium stirring mill, bead size | **mm** | - | 1 | 1 | 1 | - | 1 | - |
| Medium stirring mill, rotational speed | **rpm** | - | 4000 | 4000 | 4000 | - | 4000 | - |
| Medium stirring mill, processing time | **Sec** | - | 9 | 18 | 27 | - | 9 | - |
| Medium stirring mill, pressurized condition (immediately after the start) | **MPa** | - | 0.07 | 0.07 | 0.07 | - | 0.07 | - |
| Medium stirring mill, pressurized condition (at the time of completion of processina) | **MPa** | - | 0.07 | 0.07 | 0.07 | - | 0.07 | - |
| Homogenizer processing | | - | - | - | - | - | - | Done |
| Homogenizer, pressurized condition | **MPa** | - | - | - | - | - | - | 133 |
| Sterilization condition | | Reached temperature of 85°C | Reached temperature of 85°C | Reached temperature of 85°C | Reached temperature of 85°C | Reached temperature of 85°C | Reached temperature of 85°C | Reached temperature of 85°C |
| Processing condition after sterilization | | | | | | | | |

| **<Analysis value>** | | | | | | | | |
|---|---|---|---|---|---|---|---|---|
| Bostwick viscometer measurement value | cm/10 sec (4°C) 0Y to 10Y, | Higher than 28 | 15.0 | 3.0 | 2.0 | Higher than 28 | 8.0 | 1.0 |
| Hue | 0GY to 10GY | 2.5Y | 10Y | 10Y | 10Y | 2.5Y | 10Y | 10Y |
| Value | 6 to 9 | 9.0 | 9.0 | 9.0 | 9.0 | 9.0 | 9.0 | 9.0 |
| Chroma | 1 to 6 | 3.0 | 4.0 | 3.0 | 3.0 | 4.0 | 3.0 | 3.0 |
| d90 after ultrasonication | µm | 163.6 | 154.0 | 141.2 | 133.9 | 62.3 | 25.6 | 8.9 |
| d50 after ultrasonication | µm | 74.5 | 16.3 | 15.0 | 9.2 | 8.5 | 4.8 | 3.2 |
| Modal diameter after ultrasonication | µm | 114.1 | 5.5 | 5.5 | 5.5 | 8.9 | 3.7 | 2.9 |
| Arithmetic standard deviation | | 61.5 | 58.5 | 54.8 | 45.7 | 14.6 | 6.5 | 2.4 |
| Arithmetic standard deviation/modal diameter | | 0.5 | 10.6 | 10.0 | 8.3 | 1.7 | 1.8 | 0.8 |

| **<Sensory evaluation result>** | | | | | | | | |
|---|---|---|---|---|---|---|---|---|
| Matte feeling | | 1 | 5 | 5 | 5 | 1 | 5 | 5 |
| Glossy feeling | | 1 | 4 | 4 | 4 | 1 | 4 | 4 |
| Appearance of food with condiment | | 5 | 5 | 5 | 5 | 5 | 5 | 5 |
| Appearance on photo | | 2 | 4 | 4 | 5 | 1 | 4 | 5 |
| Shape retention property | | 1 | 4 | 5 | 5 | 1 | 4 | 5 |
| Delicious and hot taste | | 2 | 3 | 4 | 5 | 1 | 3 | 3 |
| Uneven feeling of condiment surface | | 1 | 4 | 4 | 5 | 1 | 5 | 4 |
| Appetite stimulating effect | | 5 | 5 | 5 | 5 | 5 | 5 | 5 |
| Comprehensive evaluation | | 1 | 3 | 4 | 5 | 1 | 5 | 4 |

**[Table 9]**

| **<Prescription>** | | Example 27 | Example 28 | Example 29 | Example 30 | Example 31 | Comparative Example 14 |
|---|---|---|---|---|---|---|---|
| Cabbage paste | Parts by mass | | | 250 | 250 | | |
| Broccoli stalk paste | Parts by mass | | | | | | |
| Cauliflower paste | Parts by mass | | | | | | |
| Mustard oil | Parts by mass | | | | | | |
| Mustard powder (manufactured by Colman's) | Parts by mass | 8 | 8 | 7 | 7 | | |
| Quinoa paste | Parts by mass | | | 10 | 10 | | |
| Milled rice paste | Parts by mass | | | | | | |
| Brown rice paste | Parts by mass | | | | | | |
| Saute onion (manufactured by Nihonnousankako Corporation) | Parts by mass | 5 | 5 | 40 | 40 | | |
| Mushroom paste | Parts by mass | | | | | | |
| Kelp stock | Parts by mass | 500 | 500 | | | | |
| Potato powder | Parts by mass | 40 | 40 | | | | |
| Roasted soybean powder | Parts by mass | 70 | 70 | | | | |
| Green soybean powder | Parts by mass | | | 70 | 70 | | |
| Roasted chickpea powder, low pulverization | Parts by mass | | | | | | |
| Roasted lentil powder, low pulverization | Parts by mass | | | | | | |
| Olive oil (manufactured by BOSCO) | Parts by mass | | | | | | |
| Canola oil (manufactured by Nisshin Oillio Group, Ltd.) | Parts by mass | 300 | 300 | 320 | 320 | | |
| Salt | Parts by mass | 15 | 15 | 15 | 15 | Same as Example 30 | |
| Alcohol vinegar (acidity: 10%) (manufactured by Mizkan Co., Ltd.) | Parts by mass | | | | | | |
| White wine vinegar (acidity: 5%) (manufactured by Mizkan Co., Ltd.) | Parts by mass | 80 | 80 | | | | |
| Pure apple vinegar (acidity: 5%) (manufactured by Mizkan Co., Ltd.) | Parts by mass | | | 90 | 90 | | |
| Apple vinegar (acidity: 5%) (manufactured by Mizkan Co., Ltd.) | Parts by mass | | | | | | |
| Water | Parts by mass | Balance | Balance | Balance | Balance | | |
| Total | Parts by mass | 1000 | 1000 | 1000 | 1000 | | |

| **<Pulverization processing>** | | | | | | | |
|---|---|---|---|---|---|---|---|
| Pulverization method | | Wet bead mill processing → high-pressure homogenizer | High-pressure homogenizer → wet bead mill processing | Wet bead mill | Wet bead mill | | |
| Medium stirring mill, bead size | **mm** | 1 | 1 | 2 | 2 | | |
| Medium stirring mill, rotational speed | **rpm** | 4000 | 4000 | 1500 | 1000 | | |
| Medium stirring mill, processing time | **Sec** | 9 | 9 | 1000 | 2000 | | |
| Medium stirring mill, pressurized condition (immediately after the start) | **MPa** | 0.07 | 0.08 | 0.1 | 0.2 | | |
| Medium stirring mill, pressurized condition (at the time of completion of processina) | **MPa** | 0.07 | 0.08 | 0.15 | 0.24 | | |
| Homogenizer processing | | Done after bead mill processing | Done before bead mill processing | - | - | | |
| Homogenizer, pressurized condition | **MPa** | 133 | 107 | - | - | | |
| Sterilization condition | | Reached temperature of 85°C | Reached temperature of 85°C | Reached temperature of 85°C | Reached temperature of 85°C | | |
| Processing condition after sterilization | | | | | | Techno Color Green A (manufacture d by Mitsubishi-Chemical Foods Corporation) was added to the condiment of Example 30 to adjust the hue to 2.5GY | Techno Color Green A (manufactured by Mitsubishi-Chemical Foods Corporation) was added to the condiment of Example 31 to adjust the hue to 5GY |

| **<Analysis value>** | | | | | | | |
|---|---|---|---|---|---|---|---|
| Bostwick viscometer measurement value | cm/10 sec (4°C) | 1.0 | 2.0 | 26.0 | 7.0 | Same as Example 30 | |
| Hue | 0Y to 10Y, 0GY to 10GY | 10Y | 10Y | 10Y | 10Y | 2.5GY | 5GY |
| Value | 6 to 9 | 9.0 | 9.0 | 6.0 | 7.0 | 8.0 | 9.0 |
| Chroma | 1 to 6 | 3.0 | 2.0 | 3.0 | 4.0 | 6.0 | 7.0 |
| d90 after ultrasonication | µm | 6.7 | 7.3 | 185.9 | 165.2 | Same as Example 30 | |
| d50 after ultrasonication | µm | 2.9 | 3.1 | 98.5 | 50.0 | | |
| Modal diameter after ultrasonication | µm | 2.6 | 3.1 | 96.0 | 48.0 | | |
| Arithmetic standard deviation | | 1.8 | 2.0 | 66.3 | 33.3 | | |
| Arithmetic standard deviation/modal diameter | | 0.7 | 0.6 | 0.7 | 0.7 | | |

| **<Sensory evaluation result>** | | | | | | | |
|---|---|---|---|---|---|---|---|
| Matte feeling | | 5 | 5 | 4 | 4 | 4 | 4 |
| Glossy feeling | | 4 | 5 | 4 | 4 | 4 | 2 |
| Appearance of food with condiment | | 5 | 5 | 4 | 5 | 4 | 3 |
| Appearance on photo | | 5 | 5 | 4 | 5 | 4 | 2 |
| Shape retention property | | 5 | 4 | 3 | 4 | 4 | 4 |
| Delicious and hot taste | | 3 | 3 | 4 | 5 | 5 | 5 |
| Uneven feeling of condiment surface | | 5 | 5 | 4 | 5 | 5 | 5 |
| Appetite stimulating effect | | 5 | 5 | 4 | 5 | 3 | 2 |
| Comprehensive evaluation | | 5 | 5 | 4 | 5 | 4 | 2 |

**[Table 10]**

| **<Prescription>** | | Example 32 | Example 33 | Example 34 |
|---|---|---|---|---|
| Cabbage paste | Parts by mass | | | |
| Broccoli stalk paste | Parts by mass | | | |
| Cauliflower paste | Parts by mass | | | |
| Mustard oil | Parts by mass | | | |
| Mustard powder (manufactured by Colman's) | Parts by mass | 8 | 8 | 8 |
| Quinoa paste | Parts by mass | | | |
| Milled rice paste | Parts by mass | | | |
| Brown rice paste | Parts by mass | | | |
| Saute onion (manufactured by Nihonnousankako Corporation) | Parts by mass | 50 | 50 | 50 |
| Mushroom paste | Parts by mass | | | |
| Kelp stock | Parts by mass | | | |
| Dry pumpkin powder | Parts by mass | 5 | 9 | 9 |
| Roasted soybean powder | Parts by mass | 40 | | |
| Roasted almond powder | Parts by mass | | 40 | 40 |
| amazake (rice liquefied by enzyme treatment) | Parts by mass | | | 200 |
| Roasted lentil powder, low pulverization | Parts by mass | | | |
| Olive oil (manufactured by BOSCO) | Parts by mass | | | |
| Canola oil (manufactured by Nisshin Oillio Group, Ltd.) | Parts by mass | 300 | 300 | 300 |
| Salt | Parts by mass | 15 | 15 | 15 |
| lemon juice | Parts by mass | 10 | | |
| citric acid | Parts by mass | | 2 | 2 |
| Pure apple vinegar (acidity: 5%) (manufactured by Mizkan Co., Ltd.) | Parts by mass | 80 | 80 | 80 |
| Apple vinegar (acidity: 5%) (manufactured by Mizkan Co., Ltd.) | Parts by mass | | | |
| Water | Parts by mass | Balance | Balance | Balance |
| Total | Parts by mass | 1000 | 1000 | 1000 |

| **<Pulverization processing>** | | | | |
|---|---|---|---|---|
| Pulverization method | | High-pressure homogenizer | High-pressure homogenizer | High-pressure homogenizer |
| Medium stirring mill, bead size | mm | 1 | - | - |
| Medium stirring mill, rotational speed | rpm | 3884 | - | - |
| Medium stirring mill, processing time | Sec | 8 | - | - |
| Medium stirring mill, pressurized condition (immediately after the start) | MPa | 0.05 | - | - |
| Medium stirring mill, pressurized condition (at the time of completion of processing) | MPa | 0.08 | - | - |
| Homogenizer processing | | Done before bead mill processing | Done | Done |
| Homogenizer, pressurized condition | MPa | 133 | 133 | 133 |
| Sterilization condition | | Reached temperature of 85°C | Reached temperature of 85°C | Reached temperature of 85°C |
| Processing condition after sterilization | | | | |

| **<Analysis value>** | | | | |
|---|---|---|---|---|
| Bostwick viscometer measurement value | cm/10 sec (4°C) | 4.0 | 4.0 | 3.0 |
| Hue | 0Y to 10Y, 0GY to 10GY | 5Y | 5Y | 5Y |
| Value | 6 to 9 | 9.0 | 9.0 | 9.0 |
| Chroma | 1 to 6 | 4.0 | 6.0 | 6.0 |
| d90 after ultrasonication | µm | 5.8 | 8.6 | 8.2 |
| d50 after ultrasonication | µm | 2.8 | 3.2 | 2.7 |
| Modal diameter after ultrasonication | µm | 3.0 | 3.0 | 2.3 |
| Arithmetic standard deviation | | 1.6 | 2.2 | 2.2 |
| Arithmetic standard deviation/modal diameter | | 0.5 | 0.7 | 0.9 |

| **<Sensory evaluation result>** | | | | |
|---|---|---|---|---|
| Matte feeling | | 5 | 5 | 5 |
| Glossy feeling | | 5 | 5 | 5 |
| Appearance of food with condiment | | 5 | 5 | 5 |
| Appearance on photo | | 5 | 5 | 5 |
| Shape retention property | | 5 | 5 | 5 |
| Delicious and hot taste | | 5 | 5 | 5 |
| Uneven feeling of condiment surface | | 5 | 5 | 5 |
| Appetite stimulating effect | | 5 | 5 | 5 |
| Comprehensive evaluation | | 5 | 5 | 5 |

## Claims

1. An emulsified condiment comprising fine food particles of at least one selected from the group consisting of pulses and nuts/seeds; an oil/fat; an organic acid; water; and salt, wherein
(1) a total content of fine food particles is 8 mass% or more and 98 mass% or less;
(2) a total content of the oil/fat is 20 mass% or more;
(3) a modal diameter is 0.3 µm or more and 100 µm or less;
(4) a content of water is 20 mass% or more;
(5) a value in a Munsell color system is 6 or more and 9 or less;
(6) a chroma in the Munsell color system is 1 or more and 6 or less;
(7) a hue in the Munsell color system is from 0Y to 10Y or from 0GY to 10GY; and
(8) a viscosity value measured with a Bostwick viscometer at a measurement temperature of 4°C and a measurement time of 10 seconds is 28.0 cm or less,
wherein the modal diameter, the value in the Munsell color system, the chroma in the Munsell color system and the hue in the Munsell color system are determined by the methods as described in the description.

2. The emulsified condiment according to claim 1, wherein the pulse is soybean and the nut/seed is almond.

3. The emulsified condiment according to claim 1 or 2, further comprising a vegetable.

4. The emulsified condiment according to claim 3, wherein the vegetable is a cruciferous plant.

5. The emulsified condiment according to claim 3 or 4, wherein the vegetable is at least one selected from the group consisting of cabbage, broccoli, cauliflower, and mustard.

6. The emulsified condiment according to any one of claims 1 to 5, further comprising at least one food selected from cereals.

7. The emulsified condiment according to any one of claims 1 to 6, wherein the organic acid includes acetic acid.

8. The emulsified condiment according to any one of claims 1 to 7, wherein the hue is from 5Y to 10Y or from 0GY to 5GY.

9. A method for manufacturing the emulsified condiment according to any one of claims 1 to 8, comprising the following steps (a) and (b):
(a) a step of mixing raw ingredients including at least one selected from the group consisting of pulses and nuts/seeds, an oil/fat, an organic acid, and water to manufacture a mixture solution adjusted to have a solid content of 8 mass% or more and 98 mass% or less, a total content of the oil/fat of 20 mass% or more, and a water content of 20 mass% or more; and
(b) a step of performing pulverization processing of the mixture solution with at least one selected from the group consisting of a medium stirring mill, a high-pressure homogenizer, and a colloid mill until the mixture solution has appearance in which a value is 6 or more and 9 or less, a chroma is 1 or more and 6 or less, and a hue is from 0Y to 10Y or from 0GY to 10GY in a Munsell color system and has a modal diameter of 0.3 µm or more and 100 µm or less and a viscosity value of 28.0 cm or less measured with a Bostwick viscometer at a measurement temperature of 4°C and a measurement time of 10 seconds.

10. The method according to claim 9, wherein the pulverization processing in the step (b) is performed under a pressurized condition of 0.01 MPa or more.

11. The method according to claim 9, wherein the pulverization processing in the step (b) is performed with a high-pressure homogenizer under a pressurized condition of 50 MPa or more.

## Patentansprüche

1. Emulgiertes Würzmittel, umfassend feine Lebensmittelpartikel aus mindestens einem ausgewählt aus der Gruppe bestehend aus Hülsenfrüchten und Nüssen/Samen; ein Öl/Fett; eine organische Säure; Wasser; und Salz, wobei
(1) ein Gesamtgehalt an feinen Lebensmittelpartikeln 8 Massen-% oder mehr und 98 Massen-% oder weniger beträgt;
(2) ein Gesamtgehalt des Öls/Fetts 20 Massen-% oder mehr beträgt;
(3) ein Modaldurchmesser 0,3 µm oder mehr und 100 µm oder weniger beträgt;
(4) ein Gehalt an Wasser 20 Massen-% oder mehr beträgt;
(5) ein Helligkeitswert (Value) in einem Munsell-Farbsystem 6 oder mehr und 9 oder weniger beträgt;
(6) ein Buntheitswert (Chroma) in dem Munsell-Farbsystem 1 oder mehr und 6 oder weniger beträgt;
(7) ein Farbton (Hue) in dem Munsell-Farbsystem von 0Y bis 10Y oder von 0GY bis 10GY reicht; und
(8) ein Viskositätswert, gemessen mit einem Bostwick-Viskosimeter bei einer Messtemperatur von 4 °C und einer Messzeit von 10 Sekunden, 28,0 cm oder weniger beträgt,
wobei der Modaldurchmesser, der Helligkeitswert in dem Munsell-Farbsystem, der Buntheitswert in dem Munsell-Farbsystem und der Farbton in dem Munsell-Farbsystem nach den in der Beschreibung beschriebenen Methoden bestimmt werden.

2. Emulgiertes Würzmittel nach Anspruch 1, wobei die Hülsenfrucht Sojabohne ist und die Nuss/der Samen Mandel ist.

3. Emulgiertes Würzmittel nach Anspruch 1 oder 2, ferner umfassend ein Gemüse.

4. Emulgiertes Würzmittel nach Anspruch 3, wobei das Gemüse eine Kreuzblütlerpflanze ist.

5. Emulgiertes Würzmittel nach Anspruch 3 oder 4, wobei das Gemüse mindestens eines ausgewählt aus der Gruppe bestehend aus Kohl, Brokkoli, Blumenkohl und Senf ist.

6. Emulgiertes Würzmittel nach einem der Ansprüche 1 bis 5, ferner umfassend mindestens ein Lebensmittel ausgewählt aus Getreiden.

7. Emulgiertes Würzmittel nach einem der Ansprüche 1 bis 6, wobei die organische Säure Essigsäure einschließt.

8. Emulgiertes Würzmittel nach einem der Ansprüche 1 bis 7, wobei der Farbton von 5Y bis 10Y oder von 0GY bis 5GY reicht.

9. Verfahren zur Herstellung des emulgierten Würzmittels nach einem der Ansprüche 1 bis 8, umfassend die folgenden Schritte (a) und (b):
(a) einen Schritt des Mischens von Rohzutaten, einschließlich mindestens eines ausgewählt aus der Gruppe bestehend aus Hülsenfrüchten und Nüssen/Samen, eines Öls/Fetts, einer organischen Säure und Wasser, um eine Mischungslösung herzustellen, die auf einen Feststoffgehalt von 8 Massen-% oder mehr und 98 Massen-% oder weniger, einen Gesamtgehalt des Öls/Fetts von 20 Massen-% oder mehr und einen Wassergehalt von 20 Massen-% oder mehr eingestellt ist; und
(b) einen Schritt des Durchführens einer Pulverisierungsbehandlung der Mischungslösung mit mindestens einem ausgewählt aus der Gruppe bestehend aus einer Rührwerksmühle, einem Hochdruckhomogenisator und einer Kolloidmühle, bis die Mischungslösung ein Aussehen aufweist, bei dem der Helligkeitswert 6 oder mehr und 9 oder weniger beträgt, der Buntheitswert 1 oder mehr und 6 oder weniger beträgt und der Farbton von 0Y bis 10Y oder von 0GY bis 10GY in dem Munsell-Farbsystem reicht, und die einen Modaldurchmesser von 0,3 µm oder mehr und 100 µm oder weniger und einen Viskositätswert von 28,0 cm oder weniger, gemessen mit einem Bostwick-Viskosimeter bei einer Messtemperatur von 4 °C und einer Messzeit von 10 Sekunden, aufweist.

10. Verfahren nach Anspruch 9, wobei die Pulverisierungsbehandlung in dem Schritt (b) unter einer Druckbedingung von 0,01 MPa oder mehr durchgeführt wird.

11. Verfahren nach Anspruch 9, wobei die Pulverisierungsbehandlung in dem Schritt (b) mit einem Hochdruckhomogenisator unter einer Druckbedingung von 50 MPa oder mehr durchgeführt wird.

## Revendications

1. Assaisonnement émulsionné comprenant de fines particules alimentaires d'au moins un élément choisi dans le groupe constitué des légumineuses et des noix/graines ; une huile/graisse ; un acide organique ; de l'eau ; et du sel, dans lequel
(1) une teneur totale en fines particules alimentaires est de 8 % en masse ou plus et de 98 % en masse ou moins ;
(2) une teneur totale en huile/graisse est de 20 % en masse ou plus ;
(3) un diamètre modal est de 0,3 µm ou plus et de 100 µm ou moins ;
(4) une teneur en eau est de 20 % en masse ou plus ;
(5) une valeur (value) dans un système de couleurs Munsell est de 6 ou plus et de 9 ou moins ;
(6) un chroma dans le système de couleurs Munsell est de 1 ou plus et de 6 ou moins ;
(7) une teinte (hue) dans le système de couleurs Munsell va de 0Y à 10Y ou de 0GY à 10GY ; et
(8) une valeur de viscosité, mesurée avec un viscosimètre Bostwick à une température de mesure de 4 °C et pendant un temps de mesure de 10 secondes, est de 28,0 cm ou moins,
dans lequel le diamètre modal, la valeur dans le système de couleurs Munsell, le chroma dans le système de couleurs Munsell et la teinte dans le système de couleurs Munsell sont déterminés par les méthodes décrites dans la description.

2. Assaisonnement émulsionné selon la revendication 1, dans lequel la légumineuse est le soja et la noix/graine est l'amande.

3. Assaisonnement émulsionné selon la revendication 1 ou 2, comprenant en outre un légume.

4. Assaisonnement émulsionné selon la revendication 3, dans lequel le légume est une plante crucifère.

5. Assaisonnement émulsionné selon la revendication 3 ou 4, dans lequel le légume est au moins un élément choisi dans le groupe constitué du chou, du brocoli, du chou-fleur et de la moutarde.

6. Assaisonnement émulsionné selon l'une quelconque des revendications 1 à 5, comprenant en outre au moins un aliment choisi parmi les céréales.

7. Assaisonnement émulsionné selon l'une quelconque des revendications 1 à 6, dans lequel l'acide organique comprend de l'acide acétique.

8. Assaisonnement émulsionné selon l'une quelconque des revendications 1 à 7, dans lequel la teinte va de 5Y à 10Y ou de 0GY à 5GY.

9. Procédé de fabrication de l'assaisonnement émulsionné selon l'une quelconque des revendications 1 à 8, comprenant les étapes (a) et (b) suivantes :
(a) une étape consistant à mélanger des ingrédients bruts comprenant au moins un élément choisi dans le groupe constitué des légumineuses et des noix/graines, une huile/graisse, un acide organique et de l'eau pour fabriquer une solution de mélange ajustée de manière à avoir une teneur en solides de 8 % en masse ou plus et de 98 % en masse ou moins, une teneur totale en huile/graisse de 20 % en masse ou plus et une teneur en eau de 20 % en masse ou plus ; et
(b) une étape consistant à soumettre la solution de mélange à un traitement de pulvérisation avec au moins un dispositif choisi dans le groupe constitué d'un broyeur à médias agités, d'un homogénéisateur à haute pression et d'un broyeur colloïdal, jusqu'à ce que la solution de mélange présente une apparence dans laquelle la valeur est de 6 ou plus et de 9 ou moins, le chroma est de 1 ou plus et de 6 ou moins et la teinte va de 0Y à 10Y ou de 0GY à 10GY dans le système de couleurs Munsell, et présente un diamètre modal de 0,3 µm ou plus et de 100 µm ou moins et une valeur de viscosité de 28,0 cm ou moins, mesurée avec un viscosimètre Bostwick à une température de mesure de 4 °C et pendant un temps de mesure de 10 secondes.

10. Procédé selon la revendication 9, dans lequel le traitement de pulvérisation de l'étape (b) est effectué sous une condition de pression de 0,01 MPa ou plus.

11. Procédé selon la revendication 9, dans lequel le traitement de pulvérisation de l'étape (b) est effectué avec un homogénéisateur à haute pression sous une condition de pression de 50 MPa ou plus.
